(19) **Europäisches Patentamt European Patent Office Office européen des brevets**

(11) **EP 4 002 362 B1**

(12) **EUROPEAN PATENT SPECIFICATION**

(45) Date of publication and mention of the grant of the patent:
**29.11.2023 Bulletin 2023/48**

(21) Application number: **20912595.4**

(22) Date of filing: **14.10.2020**

(51) International Patent Classification (IPC):
*G10L 21/0308* (2013.01)

(52) Cooperative Patent Classification (CPC):
**G10L 21/0308;** Y02T 10/40

(86) International application number:
**PCT/CN2020/120815**

(87) International publication number:
**WO 2021/139294 (15.07.2021 Gazette 2021/28)**

(54) **METHOD AND APPARATUS FOR TRAINING SPEECH SEPARATION MODEL, STORAGE MEDIUM, AND COMPUTER DEVICE**

VERFAHREN UND VORRICHTUNG ZUM TRAINIEREN VON SPRACHTRENNUNGSMODELLEN, SPEICHERMEDIUM UND COMPUTERVORRICHTUNG

PROCÉDÉ ET APPAREIL POUR ENTRAÎNER UN MODÈLE DE SÉPARATION DE LA PAROLE, SUPPORT DE STOCKAGE, ET DISPOSITIF INFORMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.01.2020 CN 202010013978**

(43) Date of publication of application:
**25.05.2022 Bulletin 2022/21**

(73) Proprietor: **Tencent Technology (Shenzhen) Company Limited**
**Shenzhen, Guangdong, 518057 (CN)**

(72) Inventors:
- **WANG, Jun**
  **Shenzhen, Guangdong 518057 (CN)**
- **LAM, Wing Yip**
  **Shenzhen, Guangdong 518057 (CN)**
- **SU, Dan**
  **Shenzhen, Guangdong 518057 (CN)**
- **YU, Dong**
  **Shenzhen, Guangdong 518057 (CN)**

(74) Representative: **Eisenführ Speiser Patentanwälte Rechtsanwälte PartGmbB Postfach 31 02 60 80102 München (DE)**

(56) References cited:
| | |
|---|---|
| EP-A1- 2 028 651 | CN-A- 109 036 454 |
| CN-A- 109 801 644 | CN-A- 110 473 566 |
| CN-A- 110 634 502 | CN-A- 111 243 620 |
| US-A1- 2015 066 486 | |

- **EFTHYMIOS TZINIS ET AL: "Two-Step Sound Source Separation: Training on Learned Latent Targets", ARXIV.ORG, CORNELL UNIVERSITY LIBRARY, 201 OLIN LIBRARY CORNELL UNIVERSITY ITHACA, NY 14853, 23 October 2019 (2019-10-23), XP081917666, DOI: 10.1109/ICASSP40776.2020.9054172**
- **MAX W Y LAM ET AL: "Mixup-breakdown: a consistency training method for improving generalization of speech separation models", ARXIV.ORG, CORNELL UNIVERSITY LIBRARY, 201 OLIN LIBRARY CORNELL UNIVERSITY ITHACA, NY 14853, 28 October 2019 (2019-10-28), XP081538346,**
- **QUAN WANG ET AL: "VoiceFilter: Targeted Voice Separation by Speaker-Conditioned Spectrogram Masking", ARXIV.ORG, CORNELL UNIVERSITY LIBRARY, 201 OLIN LIBRARY CORNELL UNIVERSITY ITHACA, NY 14853, 11 October 2018 (2018-10-11), XP081020100,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

This application claims priority to Chinese Patent Application No. 2020100139787, titled "METHOD AND APPARATUS FOR TRAINING SPEECH SEPARATION MODEL, STORAGE MEDIUM, AND COMPUTER DEVICE" filed on January 7, 2020.

FIELD

The present disclosure relates to the technical field of computers, and in particular to a method and an apparatus for training a speech separation model, a storage medium, and a computer device.

BACKGROUND

As an acoustic representation of language, speech is one of the most natural and effective means for humans to exchange information. In a process of voice communication, a person may be inevitably interfered by environmental noise or other speakers. These interferences result in that collected audio is not pure voice of a speaker. Recently, multiple speech separation models have been trained to separate speech of a target speaker from mixed audio. An exemplary approach for training a speech separation model is disclosed in EFTHYMIOS TZINIS ET AL: "Two-Step Sound Source Separation: Training on Learned Latent Targets", ARXIV.ORG, CORNELL UNIVERSITY LIBRARY, 201 OLIN LIBRARY CORNELL UNIVERSITY ITHACA, NY 14853, 23 October 2019, DOI: 10.1109/ICASSP40776.2020.9054172. In fact, existing speech separation models are usually trained by supervised learning. Supervised learning requires manual collecting or labeling high-quality training samples, resulting in a high training cost.

SUMMARY

According to embodiments of the present disclosure, a method and an apparatus for training a speech separation model, a storage medium, and a computer device are provided.

A method for training a speech separation model is provided. The method is executable by a computer device, and the method includes:

obtaining a first audio signal and a second audio signal, where the first audio signal includes a target audio signal component and a labeled audio signal component, and the second audio signal includes a noise audio signal;

obtaining an encoding model, an extraction model, and an initial estimation model, where an output of the encoding model is inputted into the extraction model, both the output of the encoding model and an output of the extraction model are inputted into the estimation model, and the encoding model and the extraction model jointly perform speech separation;

performing unsupervised training on the encoding model, the extraction model, and the estimation model according to the second audio signal, to adjust model parameters of the extraction model and the estimation model;

performing supervised training on the encoding model and the extraction model according to the first audio signal and the labeled audio signal component included in the first audio signal, to adjust a model parameter of the encoding model; and

performing the unsupervised training and the supervised training in combination, until a training stop condition is met.

An apparatus for training a speech separation model is provided. The apparatus includes: an obtaining module, a first training module, a second training module, and an overlapping module.

The obtaining module is configured to obtain a first audio signal and a second audio signal, the first audio signal including a target audio signal component and a labeled audio signal component, and the second audio signal including a noise audio signal; and obtain an encoding model, an extraction model, and an initial estimation model, where an output of the encoding model is inputted to the extraction model, both the output of the encoding model and an output of the extraction model are inputted to the estimation model, and the encoding model and the extraction model jointly perform speech separation.

The first training module is configured to perform unsupervised training on the encoding model, the extraction model, and the estimation model according to the second audio signal, to adjust model parameters of the extraction model and the estimation model;

The second training module is configured to perform supervised training on the encoding model and the extraction model according to the first audio signal and the labeled audio signal component included in the first audio signal, to adjust a model parameter of the encoding model; and

The overlapping module is configured to perform the unsupervised training and the supervised training in combination, until a training stop condition is met.

A non-volatile storage medium storing computer-readable instructions is provided. The computer-readable instructions, when executed by one or more processors, cause the one or more processors to perform the method for training a speech separation model.

A computer device, including a memory and a processor is provided. The memory stores computer-readable instructions, and the computer-readable instructions, when executed by the processor, cause the processor to perform the method for training a speech separation model.

Details of one or more embodiments of the present disclosure are provided in the accompany drawings and descriptions below. Other features, objectives, and advantages of the present disclosure become apparent from the specification, the accompanying drawings, and the claims.

BRIEF DESCRIPTION OF THE DRAWINGS

To describe the technical solutions in the embodiments of the present disclosure clearer, the accompanying drawings required for describing the embodiments are introduced briefly below. Apparently, the accompanying drawings in the following description show only some embodiments of the present disclosure, and a person of ordinary skill in the art may derive other accompanying drawings from these accompanying drawings without creative efforts.

FIG. 1 is a schematic flowchart of a method for training a speech separation model according to an embodiment.

FIG. 2 is a schematic diagram showing a model of a method for training a speech separation model according to an embodiment.

FIG. 3 is a schematic flowchart of unsupervised training according to an embodiment.

FIG. 4 is a schematic flowchart of supervised training according to an embodiment.

FIG. 5 is a diagram of an application environment of a speech separation scenario according to an embodiment.

FIG. 6 is a schematic flowchart of speech separation according to an embodiment.

FIG. 7 is a structural block diagram of an apparatus for training a speech separation model according to an embodiment.

FIG. 8 is a structural block diagram of an apparatus for training a speech separation model according to another embodiment.

FIG. 9 is a structural block diagram of an apparatus for training a speech separation model according to another embodiment.

FIG. 10 is a structural block diagram of a computer device according to an embodiment.

DETAILED DESCRIPTION OF EMBODIMENTS

To make objectives, technical solutions, and advantages of the present disclosure clearer and more understandable, the present disclosure is described in detail below with reference to the accompanying drawings and the embodiments. It is to be understood that the specific embodiments described herein are merely used to explain the present disclosure but are not intended to limit the present disclosure.

Artificial intelligence (AI) is a theory, method, technology, and application system that uses a digital computer or a machine controlled by a digital computer to simulate, extend, and expand human intelligence, perceive the environment, acquire knowledge, and use knowledge to obtain an optimal result. In other words, AI is a comprehensive technology of computer science, which attempts to understand the essence of intelligence and produce a new type of intelligent machine that can react in a similar way to human intelligence. AI is to study design principles and implementation methods of various intelligent machines, so that the machines have the functions of perception, reasoning, and decision-making.

The AI technology is a comprehensive discipline, covering a wide range of fields including both hardware-level technologies and software-level technologies. The basic AI technology generally includes a sensor, a dedicated AI chip, cloud computing, distributed storage, a big data processing technology, an operation/interaction system, or mechatronics. The software technology of the AI mainly includes fields such as a computer vision technology, a speech processing technology, a natural language processing technology, and machine learning/deep learning.

Key technologies of the speech technology include an automatic speech recognition (ASR) technology, a text-to-speech (TTS) technology, and a voiceprint recognition technology. To make a computer capable of listening, seeing, speaking, and feeling is the development direction of human-computer interaction, and speech has become one of the most promising human-computer interaction methods in the future.

Machine learning (ML) is a multi-disciplinary subject involving multiple disciplines such as probability theory, statistics, approximation theory, convex analysis, and algorithm complexity theory. The machine learning specializes in studying how a computer simulates or implements a human learning behavior to obtain new knowledge or skills, and reorganize an existing knowledge, so as to keep improving its performance. The machine learning is a core of the AI, is a basic way to make the computer intelligent, and is applied to various fields of the AI. The ML and DL generally include technologies such as an artificial neural network, a belief network, reinforcement learning, transfer learning, inductive learning, and learning from demonstrations.

With the research and progress of the AI technology, the AI technology is studied and applied in multiple fields, such as a common smart home, a smart wearable device, a virtual assistant, a smart speaker, smart marketing, unmanned driving, automatic driving, an unmanned aerial vehicle, a robot, smart medical care, and smart customer service. It is believed that with the development of technologies, the AI technology will be applied in more fields, and play an increasingly important role.

The solutions provided in the embodiments of the present disclosure involve technologies such as a speech, and machine learning/deep learning of AI, and are described by using the following embodiments.

In the embodiments of the present disclosure, an encoding model and an extraction model obtained when unsupervised training and supervised training is completed may jointly perform speech separation. Speech separation may refer to separating target audio from mixed audio. The mixed audio herein may be speech of a target speaker mixed with noise, or speech of the target speaker mixed with speech of other speaker. The target audio herein may be the speech of the target speaker. In this case, speech separation may refer to separating pure speech of the target speaker from the speech of the target speaker mixed with noise.

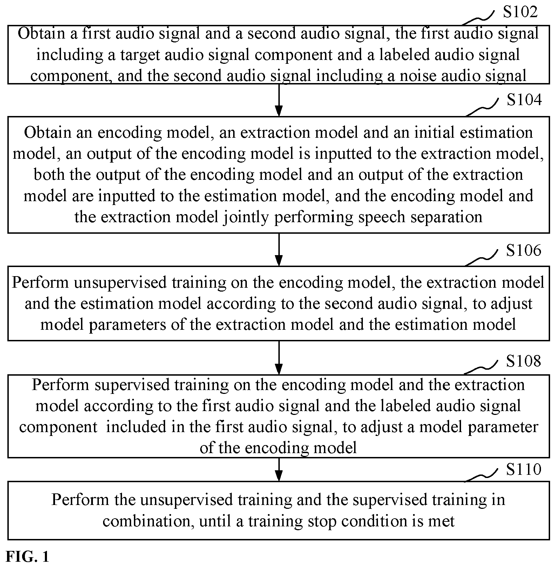

As shown in FIG. 1, in an embodiment, a method for training a speech separation model is provided. In this embodiment, it is assumed that the method is applied to a computer device. The computer device may be a terminal or a server. Referring to FIG. 1, the method for training a speech separation model includes the following steps S102 to S 110.

In step S 102, first audio and second audio are obtained. The first audio includes target audio and labeled audio, and the second audio includes noise audio.

Both the first audio and the second audio are used as model training data. The target audio is audio to be separated from the first audio. The labeled audio is used as a model training tag. The labeled audio of the first audio including the target audio is pure target audio. The first audio is mixed audio, and may include noise audio. The noise audio is a relative to the target audio, and sound signals other than the target audio are the noise audio. The target audio may be speech of a speaker or melody of a musical instrument. The noise audio may be interference sounds, environmental sounds, or non-target voices or melody.

For example, when a voice collection device collects speech of a target speaker in a far field in which there are environmental sounds and speech of other speakers, collected audio includes the speech of the target speaker, environmental sounds, the speech of other speakers, and the like. Therefore, the collected audio serves as the first audio, and the target audio included in the first audio is the speech of the target speaker, the noise audio included in the first audio includes the environmental sounds, the speech of other speakers, and the like.

The first audio includes the target audio, the noise audio, and the labeled audio. In this way, the computer device may perform supervised model training by using the first audio and the labeled audio.

The second audio may be single audio or mixed audio. In a case that the second audio is the single audio, the second audio is pure noise audio. In a case that the second audio is the pure noise audio, the noise audio is background audio or interference audio. It may be considered that the background audio and the interference audio do not include speech of a speaker. In a case that the second audio is the mixed audio, the second audio includes the target audio and the noise audio.

The second audio includes the noise audio, and no labeled audio. In this way, the computer device may perform unsupervised model training by using the second audio.

In an embodiment, the first audio and the second audio are single-channel audio; the first audio is the mixed audio including the target audio; the labeled audio of the first audio is the pure target audio; and the second audio includes pure noise audio and mixed audio including the noise audio.

Both the first audio and the second audio are audio collected by a single microphone, namely, the single-channel audio. The first audio is the mixed audio, and includes the target audio. The labeled audio of the first audio is the pure target audio. The second audio may be the pure noise audio, or the mixed audio including the noise audio.

For example, the target audio is the speech of the target speaker, the noise audio is environmental sounds of a public place such as a train station or a shopping mall, the first audio is audio of the speech of the target speaker recorded in a far field, and the labeled audio of the first audio may be audio of the speech of the target speaker recorded in a near field. The second audio may be the audio of the speech of the target speaker recorded in the far field, or a recorded background sound when no speaker speaks.

In an embodiment, the computer device may mix pure speech of the target speaker with speech of other speakers or environment background sounds, to obtain the first audio. In this way, the pure speech of the target speaker may serve as the labeled audio of the first audio subjected to mixing. The pure speech of the target speaker herein may be recorded in a quiet environment or recorded by a near field microphone.

In an embodiment, the computer device may collect the speech of the target speaker by simultaneously using a far field microphone and the near field microphone, audio collected by the far field microphone serves as the first audio, and audio collected by the near field microphone serves as the labeled audio of the first audio. The far field microphone is far away from the target speaker. It may be considered that the far field microphone not only collects the speech of the target speaker, but also collects the environment background sounds and/or the speech of other speaker. That is, audio collected by the far field microphone is the mixed audio including the speech of the target speaker, which may serve as the first audio. The near field microphone is close to the target speaker, such as being arranged close to a mouth of the target speaker. It may be considered that audio collected by the near field microphone is the pure speech of the target speaker, which may serve as the labeled audio of the first audio.

In step S104, an encoding model, an extraction model, and an initial estimation model are extracted. An output of the encoding model is inputted to the extraction model, both the output of the encoding model and an output of the extraction model are inputted to the estimation model, and the encoding model and the extraction model jointly perform speech separation.

The encoding model is a ML model for mapping low-dimensional data to high-dimensional data. Herein, a dimension of the low-dimensional data is lower than a dimension of the high-dimensional data. The extraction model is a ML model for constructing an abstract feature according to inputs. The estimation model is a ML model for estimating mutual information (MI) between two inputs.

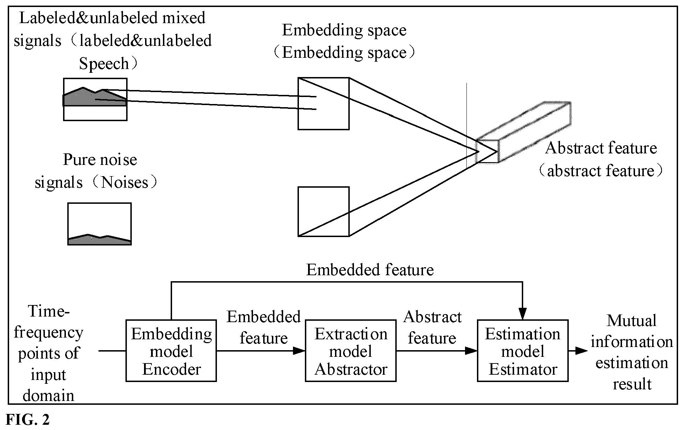

For example, referring to FIG. 2, the encoding model, the extraction model, and the initial estimation model may connected as follows. The output of the encoding model is inputted to the extraction model; and both the output of the encoding model and the output of the extraction model are inputted to the estimation model. The input of the encoding model is time-frequency points of labeled and unlabeled mixed signals, and pure noise signals. The encoding model maps time-frequency points of an input domain to an embedding space, to obtain an embedded feature of the embedding space; and the extraction model extracts an abstract feature of the speech of the target speaker from the embedded feature. The estimation model outputs an estimation result of MI.

The encoding model and the extraction model jointly perform speech separation. That is, the encoding model and the extraction model are configured to jointly separate the target audio from the mixed audio. The encoding model and the extraction model are components of a speech separation model, and the speech separation model includes the encoding model and the extraction model.

In most industrial applications that actually use speech enhancement and separation, labeled audio can only cover a small part of application scenarios, and a large amount of data is unlabeled. In addition to a problem of obtaining efficiency of training data, performing supervised learning based on labeled data results in problems in robustness and generalization. For example, a speech feature learned in a speech environment with interference by performing only supervised learning is generally not applicable to another background noise environment. Based on this, in the embodiments of the present disclosure, the computer device may optimize a discrimination capability of supervised learning by using a large amount of unlabeled audio and the estimation model, and using robustness and generalization of a representation capability of unsupervised learning; and optimize the representation capability of unsupervised learning by using the discrimination capability of supervised learning. The discrimination capability learned from supervised training is used to recognize the target audio from the mixed audio.

The computer device obtains the initial encoding model, the extraction model, and the estimation model, and perform subsequent training on these models, so that the encoding model and the extraction model subjected to training jointly perform speech separation.

In an embodiment, the computer device may pre-train the encoding model and the extraction model by using the labeled audio in a supervised manner. For the pre-training process, one may refer to the description in the subsequent embodiments. In this way, the computer device may obtain the encoding model, the extraction model, and the initial estimation model subjected to pre-training; and perform subsequent training on these models, thereby improving precision of the models.

In an embodiment, the encoding model and the extraction model may have a bidirectional long short-term memory (BiLSTM) structure, a long short-term memory (LSTM) structure, a convolutional neural network (CNN) structure, or other network structure. For example, the other network structure may be a time delay network structure or a gated CNN structure. A model type and a topology structure are not limited in the present disclosure, and various other effective new model structures may be used t. The estimation model may calculate an inner product between two inputs by using a feature matrix.

In step S 106, unsupervised training is performed on the encoding model, the extraction model, and the estimation model according to the second audio, and model parameters of the extraction model and the estimation model are adjusted.

The unsupervised training may also be referred to as unsupervised learning, and is a method that a ML model learns based on unlabeled sample data.

In an embodiment, the process of performing unsupervised training on the encoding model, the extraction model, and the estimation model according to the second audio, and adjusting model parameters of the extraction model and the estimation model includes: encoding an audio feature of the second audio through the encoding model, to obtain an embedded feature of the second audio; extracting the embedded feature of the second audio through the extraction model, to obtain an abstract feature of the target audio included in the second audio; performing processing on the embedded feature of the second audio and the abstract feature of the target audio included in the second audio through the estimation model, to obtain an MI estimation feature between the second audio and the abstract feature of the target audio included in the second audio; constructing an unsupervised training loss function according to the MI estimation feature; and fixing the model parameter of the encoding model, and adjusting the model parameters of the extraction model and the estimation model to minimize the unsupervised training loss function.

The audio feature is data obtained by processing physical information of audio. For example, the physical information is spectrum information. The audio feature may be a time-frequency feature, a Gammatone power spectrum feature, a spectrum amplitude feature, a Mel frequency cepstrum coefficient (MFCC) feature, or the like, where Gammatone is a filtered feature obtained by simulating a human cochlea.

In an embodiment, the computer device may perform short-time Fourier transform on the second audio, to obtain time-frequency points of the second audio; and obtain a time-frequency feature formed by the time-frequency points as the audio feature of the second audio.

The computer device may perform the short-time Fourier transform (STFT) on the second audio, to obtain a short-time Fourier spectrum $\chi \subseteq R^{TF}$ of the second audio, where $T$ represents a quantity of frames in a time dimension, $F$ represents a quantity of frequency bands in a frequency dimension, and R represents a real number.

In the embodiment of the present disclosure, the short-time Fourier spectrum of the second audio serves as input data (training samples) of the encoding model. A group of unlabeled training samples obtained from a group of unlabeled second audio may be represented as: $\{X^{(1)}, X^{(2)},...,X^{(L)} \in \chi\}$. Each training sample may be a group of time-frequency points $\{\mathbf{x} = X_{t,f}\}_{t=1,...,T;f=1,...,F}$ in an input space. $X_{t,f}$ may represent time-frequency points of a f-th frequency band in a t-th frame. A time-frequency feature formed by these time-frequency points may be represented by a real number matrix with a dimension of $T \times F$.

For mixed audio including the target audio and the noise audio, it may be considered that a time-frequency point $X$ of the mixed audio is formed by mixing a time-frequency point $x$ of the target audio with a time-frequency point $e$ of the noise audio, for example, $X=x+e$.

In addition, a group of unsupervised training samples obtained from the pure noise audio may be represented as: $\{X^{(L+1)},X^{(L+2)},...,X^{(L+U)} \in \chi\}$.

In an embodiment, a sampling rate of audio is 16 kHz, namely, 16k sampling points per second. In The STFT, an STFT window length of 25 ms, window shift of 10 ms, and 257 frequency bands are adopted. That is, when the audio is divided into frames, a frame length is 25 ms, and the window shift is 10 ms, so as to obtain a quantity of frames $T$, and $F=257$.

In an embodiment, the computer device may map a low-dimensional audio feature to a high-dimensional embedding space through the encoding model, to obtain an embedded feature.

The computer device may input a time-frequency point matrix (the time-frequency feature) of the second audio obtained by performing the STFT on the second audio into the encoding model. The encoding model performs a non-linear operation on the input, and embeds the inputs into a D-dimensional embedding space, to obtain the embedded feature of the second audio in the embedding space.

For example, still referring to FIG. 2, the encoding model is: $E_{\theta}: \chi \rightarrow v \subseteq R^{TF \times D}$, where $\theta$ represents the model parameter of the encoding model, $D$ represents a dimension of the embedding space, $E_{\theta}$ represents an operation process of mapping an input domain $\chi$ to a high-dimensional embedding space $v$. An embedded feature obtained by mapping a time-frequency feature formed by a group of time-frequency points in the input space is a real number matrix with a dimension of $T \times F \times D$

An input domain $\chi \subseteq R^{TF}$ represents a short-time Fourier spectrum of the audio, *T* represents a quantity of frames in a time dimension, and *F* represents a quantity of frequency bands in a frequency dimension. The input of the encoding model is a group of time-frequency points ($T \times F$) of the input domain, this group of time-frequency points may be grouped into *T* groups according to frames, with time-frequency points ($1 \times F$) per group, namely, time-frequency points of each frame of the audio. Then, an embedded feature $\upsilon$ of an output domain may be an embedded feature $\upsilon_t$ corresponding to each frame of the audio, namely, each frame of the second audio corresponds to one embedded feature.

In an embodiment, the encoding model may have a four-layer BiLSTM structure, and there are 600 nodes in each hidden layer. The BiLSTM structure is subsequently connected to a fully connected layer, and maps a 600-dimensional hidden vector to a high-dimensional embedding space with 257*40 dimensions, where 257 is the quantity of STFT frequency bands, namely, *T*; and 40 is the dimension of the embedding space, namely, *D*.

In an embodiment, the process of extracting the embedded feature of the second audio through the extraction model, to obtain an abstract feature of the target audio included in the second audio includes: performing processing on the embedded feature of the second audio through a first hidden layer of the extraction model, to obtain a prediction probability that the time-frequency points of the second audio are time-frequency points of the target audio; and chronologically performing calculation on embedded features of the time-frequency points and prediction probabilities of the time-frequency points through a second hidden layer of the extraction model, to construct a global abstract feature of the target audio included in the second audio.

The hidden layer is a term in a network model, and is an intermediate layer relative to an input layer and an output layer. The hidden layer includes model parameters obtained by training network models. The hidden layer of the extraction model herein is an intermediate layer relative to an input layer and an output layer of the extraction model. All intermediate layers between the input layer and the output layer of the extraction model may be collectively referred to as hidden layers, or the intermediate layers may be distinguished from each other, for example, a first hidden layer or a second hidden layer. The hidden layers of the extraction model may include more than one network structures. Each network structure may include one or more network layers. The hidden layers of the extraction model may be understood and described as "black boxes" herein.

The embedded feature of the second audio is processed through the first hidden layer of the extraction model, to obtain the prediction probability that the time-frequency points of the second audio are predicted to be the time-frequency points of the target audio. The embedded features of the time-frequency points and the prediction probabilities of the time-frequency points are chronologically calculated through the second hidden layer of the extraction model, to construct the global abstract feature of the target audio included in the second audio.

For example, still referring to FIG. 2, the extraction model is $A_\varphi : v \to P \subseteq R^{TF}$, $v \times P \to C \subseteq R^D$, where $\varphi$ represents the model parameter of the extraction model. $A_\varphi$ represents that the embedded feature $\upsilon$ is converted into a probability matrix P , and an abstract feature *C* is obtained by performing calculation on the embedded feature $\upsilon$ and the probability matrix P . P represents a real number matrix with a dimension of $T \times F$ . C represents a real number vector with a dimension of $D \times 1$ or $1 \times D$ .

The input of the encoding model is the group of time-frequency points ($T \times F$) in the input domain, and p represents a real number matrix with a dimension of $T \times F$ . In this way, p may be a probability matrix formed by prediction probabilities respectively corresponding to $T \times F$ time-frequency points. The prediction probability indicates a probability that the time-frequency point is predicted to be the time-frequency point of the target audio.

In an embodiment, the extraction model may calculate the global abstract feature by using the following formula:

$$c = \frac{\sum_{t,f} \upsilon \odot p}{\sum_{t,f} p} \qquad (1)$$

In which, $c \in C$ represents the global abstract feature of the target audio included in the second audio, $\upsilon \in v$ represents the embedded feature, $p \in P$ represents the prediction probability, t represents a frame index, *f* represents a frequency band index, and $\odot$ represents an element dot product.

In an embodiment, the extraction model may multiply formula (1) by a binary threshold matrix, to reduce an influence of low-energy noise, as shown below:

$$c = \frac{\sum_{t,f} \upsilon \odot p \odot w}{\sum_{t,f} p \odot w} \qquad (2)$$

In which, $w \in \mathrm{R}^{TF}$ represents the following binary threshold matrix:

$$w_{t,f} = \begin{cases} 0, & if X_{t,f} < \max(X)/100 \\ 1, & otherwise \end{cases} \qquad (3)$$

For brief representation, embedding-dimensional index subscripts of $c$ and $\upsilon$ are omitted in the formula provided in the embodiment of the present disclosure.

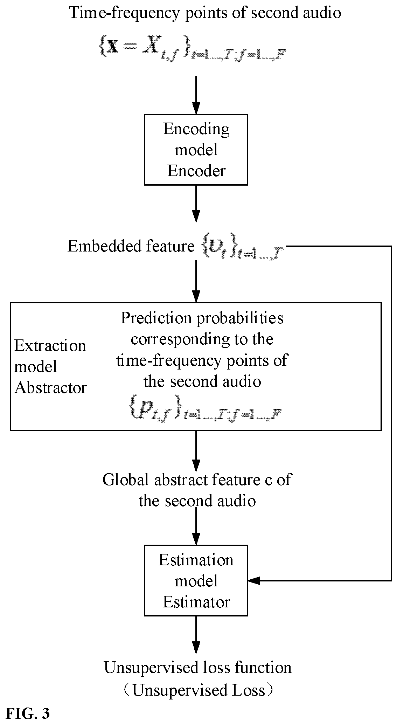

For example, as shown in FIG. 3, in an unsupervised training stage, time-frequency points $\{\mathbf{x} = X_{t,f}\}_{t=1\ldots,T;f=1\ldots,F}$ of the second audio are inputted into the encoding model, and embedded features $\{\upsilon_t\}_{t=1\ldots,T}$ corresponding to frames of the second audio are outputted; and $\{\upsilon_t\}_{t=1\ldots,T}$ is inputted into the extraction model to obtain an intermediate result, namely, prediction probabilities $\{p_{t,f}\}_{t=1\ldots,T;f=1\ldots,F}$ corresponding to the time-frequency points of the second audio, and a global abstract feature $C$ of the second audio is outputted. Both $\{\upsilon_t\}_{t=1\ldots,T}$ and $C$ are inputted into the estimation model, and an unsupervised loss function may be constructed based on an output of the estimation model.

In an embodiment, the extraction model may use an autoregression model, to chronologically construct the global abstract feature (which may be long-time, namely, a relatively low time resolution) based on a local embedded feature (an embedded feature of a current frame of the second audio). Alternatively, the extraction model may use a recurrent model or an abstract function, and construct the global abstract feature based on the local embedded feature.

In an embodiment, the extraction model includes a fully connected layer, maps a 257*40-dimensional hidden vector to 600 dimensions, and inputs the mapped hidden vector into a two-layer BiLSTM structure. There are 600 nodes in each hidden layer.

In this embodiment, the extraction model extracts a global, long-term stable, and "slow" (a low time-domain resolution) abstract feature from the embedded feature through unsupervised learning, which can more accurately describe the feature of the target audio hidden in the second audio, so that more accurate speech separation is performed subsequently based on the extraction model.

The encoding model encodes all input information in the embedded feature, while the extraction model only extracts an abstract feature from target information hidden in the input data, namely, extracts the abstract feature of the target audio included in the second audio.

In an embodiment, the computer device may estimate, through the estimation model, an MI estimation feature between the second audio and the abstract feature of the target audio included in the second audio according to the embedded feature of the second audio and the abstract feature of the target audio included in the second audio.

The MI estimation feature refers to a feature related to MI. The MI is a measure of information, indicating an amount of information related to another variable contained in one variable. Generally, the MI cannot be accurately estimated. In this embodiment, the MI estimation feature may be represented as an estimation of MI between the second audio and the abstract feature of the target audio included in the second audio.

The estimation model may combine the embedded feature of the second audio with the abstract feature of the target audio included in the second audio to perform operation, to obtain the MI estimation feature between the second audio and the abstract feature of the target audio included in the second audio. The combination herein may be y splicing, that is, the embedded feature of the second audio and the abstract feature of the target audio included in the second audio are spliced together.

For example, still referring to FIG. 2, the estimation model is $T_\omega : v \times c \to MI \subseteq \mathrm{R}$. In which, $\omega$ represents the model parameter of the estimation model, $T_\omega$ represents a process of estimating the MI estimation feature between the second audio and the abstract feature $C$ of the target audio included in the second audio. Specifically, $T_\omega = D_\omega \circ g \circ (v, c)$, where $g$ represents a function that the embedded feature $V$ and the abstract feature $C$ are associated, and MI represents a real number.

In an embodiment, the estimation model uses a weighted matrix $\omega \in \mathrm{R}^{40 \times 40}$ used for calculating an inner product: $T_\omega(v,c) = c^T \omega c$.

In this embodiment, MI between the mixed audio and an abstract feature of the target audio included in the mixed audio is estimated based on the estimation model. Based on a physical meaning of the MI, an unsupervised learning loss function id constructed according to the MI, so that the constructed loss function is used for model training.

In an embodiment, the process of constructing an unsupervised training loss function according to the MI estimation feature includes: selecting first time-frequency points predicted to be positive samples according to the prediction probabilities of the time-frequency points; obtaining second time-frequency points used as negative samples, the second time-frequency points being selected from pure noise audio following a noise proposal distribution; constructing the unsupervised training loss function according to an MI estimation feature corresponding to the first time-frequency points and an MI estimation feature corresponding to the second time-frequency points.

Usually, a speech separation task may be regarded as a binary classification task. That is, time-frequency points of to-be-separated audio are classified into positive samples, namely, the time-frequency points of the target audio; or are classified into negative samples, namely, time-frequency points of non-target audio. In this embodiment of the present disclosure, a probability threshold may be preset. In a case that a prediction probability of a time-frequency point reaches or exceeds the probability threshold, the time-frequency point is classified into a positive sample.

In addition, the time-frequency points of the pure noise audio follow the noise proposal distribution. For a probability distribution p(x) that cannot be directly sampled, a commonly used probability distribution q(x) may be constructed, so that all x meet k*q(x)>p(x); and a sampling rejection method is used for sampling p(x), and the q(x) is referred to as a proposal distribution. In this way, the noise proposal distribution may be regarded as a proposal distribution of the probability distribution followed by the noise audio. The computer device may obtain the second time-frequency points serving as the negative samples from the noise proposal distribution; and construct the unsupervised training loss function according to the MI estimation feature corresponding to the first time-frequency points and the MI estimation feature corresponding to the second time-frequency points.

In an embodiment, a formula for the unsupervised training loss function is expressed as follows:

$$L_\Theta^{(\mathrm{Im\,NICE})} = -\mathrm{E}_{\mathrm{p}}\left[\log\frac{f_\Theta(\mathbf{x},c)}{f_\Theta(\mathbf{x},c) + \mathrm{E}_{\tilde{\mathrm{p}}}\left[\sum_{x'} f_\Theta(x',c)\right]}\right] \qquad (4)$$

In which, $f_\Theta(\mathbf{x},c)=\exp(T_\omega(E_\theta(\mathbf{x}),c))$; $c : A_\varphi(E_\theta(\mathbf{x})) \in C$ represents the abstract feature of the target audio included in the second audio; and $\mathbf{x}$ represents time-frequency points predicted to be the positive samples, and a distribution p; $p(\mathbf{x}, c)$ of these time-frequency points represents a joint distribution of $\mathbf{x}$ and c. The computer device may output an intermediate result of the extraction model, that is, prediction probabilities $p$ of time-frequency points serve as estimation values of $p(\mathbf{x},c)$. $x'$ represents time-frequency points serving as the negative sample that are extracted from the proposal distribution $\tilde{p}$ of the pure noise audio. $\mathrm{E}_p(z)$ represents calculating an expectation of a variable z following a distribution p.

In other embodiments, $x'$ may represent a set of time-frequency points predicted to be the non-target audio and time-frequency points extracted from the pure noise audio.

In this embodiment of the present disclosure, the unsupervised training loss function may be named as InfoMax noise-interference contractive estimation (ImNICE).

In this embodiment, the estimation model is used for estimating MI between two pieces of data, and may also be referred to as an MI model.

A joint probability distribution $p(\mathbf{x},c)$ required in the unsupervised training loss function may be outputted by the intermediate layer of the extraction model as the estimation values of $p(\mathbf{x},c)$, and the extraction model is trained in a pre-training stage and a subsequent supervised training stage. In this way, a reliable joint probability distribution $p(\mathbf{x},c)$ for unsupervised learning is effectively estimated through supervised training. A probability distribution followed by prediction probabilities corresponding to time-frequency points outputted from the intermediate layer of the extraction model may serve as the estimation values of $p(\mathbf{x}, c)$.

In an embodiment, the computer device may input the time-frequency points of the second audio into the encoding model and the extraction model after the encoding model and the extraction model are pre-trained, to obtain the prediction probabilities respectively corresponding to the time-frequency points of the second audio, and classify the time-frequency points of the second audio into the time-frequency points predicted to be the target audio and the time-frequency points predicted to be the non-target audio according to the prediction probabilities of the time-frequency points. The time-frequency points predicted to be the target audio are regarded as the positive samples, and the negative samples are selected from the time-frequency points predicted to be the non-target audio and the time-frequency points of the pure noise audio. The probability distribution of the prediction probabilities corresponding to the time-frequency points outputted from the intermediate layer of the extraction model may serve as the estimation values of $p(\mathbf{x},c)$ in subsequent unsupervised learning. In this way, sample classification and determination of the joint probability distribution are performed without an unsupervised training iteration process, thereby reducing a calculation amount in each iteration. However, a convergence speed may be low.

In an embodiment, the computer device may input the time-frequency points of the second audio into the encoding model and the extraction model in the unsupervised training, to obtain the prediction probabilities respectively corresponding to the time-frequency points of the second audio; and classify the time-frequency points of the second audio into the time-frequency points predicted to be the target audio and the time-frequency points predicted to be the non-target audio according to the prediction probabilities of the time-frequency points. The time-frequency points predicted to be the target audio serve as the positive samples, and the negative samples are selected from the time-frequency points predicted to be the non-target audio and the time-frequency points of the pure noise audio. The probability distribution of the prediction probabilities corresponding to the time-frequency points outputted from the intermediate layer of the extraction model may serve as the estimation values of $p(\mathbf{x},c)$ in this iteration. In this way, the sample classification and the determination of the joint probability distribution are performed in the unsupervised training iteration process, thereby improving a convergence speed. However, more calculation amounts may be generated for each iteration.

In this embodiment, the unsupervised training function is constructed based on the physical meaning of MI, and the unsupervised learning is performed by utilizing the discrimination capability learned in supervised learning, so that the unsupervised learning and the supervised learning are effectively combined, thereby promoting mutual optimization, and thus improving model training efficiency.

Further, the computer device may fix the model parameter of the encoding model, and adjust the model parameters of the extraction model and the estimation model to minimize the unsupervised training loss function.

In the above embodiments, a large amount of unlabeled second audio is used for unsupervised training. In an unsupervised learning stage, the model parameter of the encoding model is not updated, and only the model parameters of the extraction model and the estimation model are updated. In this way, the abstract feature can be calculated based on a stable discriminative embedded feature space constructed in a pre-training stage, and an extraction capability in the unsupervised process can be optimized by using the capability learned in the supervised learning, so that an abstract feature with robustness and generalization is extracted from mixed signals containing interference for hidden information.

In an embodiment, the computer device may set a size of batch processing data to be 32, an initial learning rate to be 0.0001, a weight reduction coefficient of the learning rate to be 0.8, a quantity of output layer nodes of the encoding model to be 40, a quantity of random down-sampling frames for each segment of audio to be 32, a quantity of negative samples corresponding to each positive sample in formula (1) to be 63, and a probability threshold of a positive sample prediction probability to be 0.5.

In step S108, supervised training is performed on the encoding model and the extraction model according to the first audio and the labeled audio included in the first audio, and the model parameter of the encoding model is adjusted.

The supervised training may also be referred to as supervised learning, and is a method in which a ML model learns based on labeled sample data. In this embodiment of the present disclosure, the supervised learning and the unsupervised learning share the same encoding model and extraction model.

In an embodiment, the process of performing supervised training on the encoding model and the extraction model according to the first audio and the labeled audio included in the first audio, and adjusting the model parameter of the encoding model includes: encoding an audio feature of the first audio through the encoding model, to obtain an embedded feature of the first audio; extracting the embedded feature of the first audio through the extraction model, to obtain an abstract feature of the target audio included in the first audio; constructing a supervised training loss function according to the labeled audio of the first audio, the embedded feature of the first audio, and the abstract feature of the target audio included in the first audio; and fixing the model parameter of the extraction model, and adjusting the model parameter of the encoding model to minimize the supervised training loss function.

In an embodiment, the computer device may perform FT on the first audio, to obtain the audio feature of the first audio. For example, the computer device performs the STFT on the first audio, to obtain time-frequency points of the first audio; and obtains a time-frequency feature formed by the time-frequency points as the audio feature of the first audio.

The computer device may perform the STFT on the first audio, to obtain a short-time Fourier spectrum $\chi \subseteq R^{TF}$ of the first audio, where $T$ represents a quantity of frames in a time dimension, $F$ represents a quantity of frequency bands in a frequency dimension, and R represents a real number.

In this embodiment of the present disclosure, the short-time Fourier spectrum of the first audio serves as input data (training samples) of the encoding model. In this way, a group of labeled training samples obtained from a group of labeled first audio may be represented as: $\{X^{(L+U+1)}, X^{(L+U+2)}, ..., X^{(L+U+N)} \in \chi\}$. Then, each training sample may be a group of time-frequency points $\{\mathbf{x} = X_{t,f}\}_{t=1,...,T; f=1,...,F}$ of an input space. $X_{t,f}$ may represent time-frequency points of a f-th frequency band in a t-th frame. A time-frequency feature formed by these time-frequency points may be a real number matrix with a dimension of $T \times F$.

In other embodiments, the computer device may calculate a Gammatone power spectrum feature, a spectrum amplitude feature, a Mel Frequency Cepstrum Coefficient (MFCC) feature, or the like of the first audio, as the audio feature of the first audio.

In an embodiment, the computer device may map a low-dimensional audio feature to a high-dimensional embedding space through the encoding model, to obtain an embeddedg feature.

The computer device may input a time-frequency point matrix (the time-frequency feature) of the first audio obtained by performing the STFT on the first audio into the encoding model. The encoding model performs non-linear operation on the input, and embeds the input into a D-dimensional embedding space, to obtain the embedded feature of the first audio in the embedding space.

For example, the encoding model is: $E_\theta : \chi \to v \subseteq R^{TF \times D}$ , where $\theta$ represents the model parameter of the encoding model, $D$ represents a dimension of the embedding space, $E_\theta$ represents an operation process of mapping an input domain $\chi$ to a high-dimensional embedding space $V$. An embedded feature obtained by mapping a time-frequency feature formed by a group of time-frequency points in the input space is a real number matrix with a dimension of $T \times F' \times D$. An input domain $\chi \subseteq R^{TF}$ represents a short-time Fourier spectrum of the audio, $T$ represents a quantity of frames in a time dimension, and $F$ represents a quantity of frequency bands in a frequency dimension. The input of the encoding model is a group of time-frequency points $(T \times F)$ in the input domain, this group of time-frequency points may be classified into $T$ groups according to frames, with time-frequency points $(1 \times F)$ per group, namely, time-frequency points of each frame of the audio. Then, an embedded feature $v$ of an output domain may be an embedded feature $v_t$ corresponding to each frame of the audio, namely, each frame of the second audio corresponds to one embedded feature, which may be referred to as a time-varying embedded feature.

In an embodiment, the computer device may perform processing on the embedded feature through the first hidden layer of the extraction model, to obtain a prediction probability that the time-frequency points of the first audio are the time-frequency points of the target audio; and perform calculation on embedded features of the time-frequency points and prediction probabilities of the time-frequency points through the second hidden layer of the extraction model, to construct a time-varying abstract feature of the target audio included in the first audio.

The processing is performed on the embedded feature of the first audio through the first hidden layer of the extraction model, so as to obtain the prediction probability that the time-frequency points of the first audio are predicted to be the time-frequency points of the target audio. Calculation is performed on the embedded features of the time-frequency points and the prediction probabilities of the time-frequency points through the second hidden layer of the extraction model, so as to construct the time-varying abstract feature of the target audio included in the first audio.

For example, the extraction model is $A_\varphi : v \to P \subseteq R^{TF}, v \times P \to C \subseteq R^D$, where $\varphi$ represnts the model parameter of the extraction model. $A_\varphi$ represents that a calculation process that the embedded feature $v$ is converted into a probability matrix p , and an abstract feature $c$ is obtained according to the embedded feature $v$ and the probability matrix p . p represents a real number matrix with a dimension of $T \times F$. $c$ represents a real number vector with a dimension of $D \times 1$ or $1 \times D$. The input of the encoding model is the group of time-frequency points $(T \times F)$ in the input domain, and p represents a real number matrix with a dimension of $T \times F$. In this way, p may be a probability matrix formed by prediction probabilities respectively corresponding to $T \times F$ time-frequency points. The prediction probabilities represent probabilities that the time-frequency points are predicted to be the time-frequency points of the target audio.

In an embodiment, the extraction model may calculate the time-varying abstract feature by using the following formula:

$$c_t = \frac{\sum_f v_t \odot p_t}{\sum_f p_t} \qquad (5)$$

In wich, $c_t \in C$ represents an abstract feature of a t-th frame of the target audio included in the first audio, namely, the time-varying abstract feature of the target audio included in the first audio, $v_t \in v$ represents the embedded feature, $p_t \in P$ represents the prediction probability, $t$ represents a frame index, $f$ represents a frequency band index, and $\odot$ represents an element point product.

In an embodiment, the extraction model may multiply formula (5) by a binary threshold matrix, to reduce an influence of low-energy noise, as shown below:

$$c_t = \frac{\sum_f v_t \odot p_t \odot w_t}{\sum_f p_t \odot w_t} \qquad (6)$$

In which, the binary threshold matrix represented by $w \in R^{TF}$ is the same as the formula (3) in the above embodiment.

For brief representation, embedding-dimensional index subscripts of $c$ and $v$ are omitted in the formula provided in the embodiment of the present disclosure.

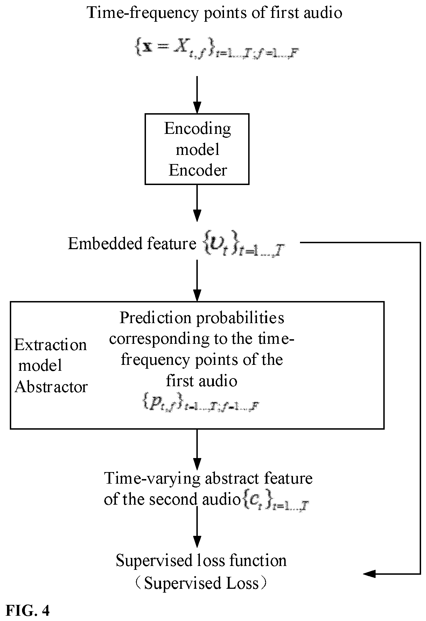

For example, as shown in FIG. 4, at a supervised training stage, time-frequency points $\{\mathbf{x} = X_{t,f}\}_{t=1...,T;f=1...,F}$ of the first audio are inputted into the encoding model, and embedded features $\{v_t\}_{t=1...,T}$ corresponding to frames of the first audio are outputted; and $\{v_t\}_{t=1...,T}$ is inputted into the extraction model to obtain an intermediate result, namely, prediction probabilities $\{p_{t,f}\}_{t=1...,T;f=1...,F}$ corresponding to the time-frequency points of the first audio, and a time-varying abstract feature $\{c_t\}_{t=1...,T}$ of the first audio is outputted. The supervised loss function may be constructed based on $\{\mathbf{x} = X_{t,f}\}_{t=1...,T;f=1...,F}$, $\{v_t\}_{t=1...,T}$, and $\{c_t\}_{t=1...,T}$.

In an embodiment, the extraction model may use an autoregression model, and construct the time-varying abstract feature based on local embedding features (embedded features of frames of the second audio). Alternatively, the extraction model may use a recurrent model or an abstract function, and construct the time-varying abstract feature based on the local embedded features (the embedded features of the frames of the second audio).

In this embodiment, the extraction model extracts, through supervised learning, high-time-domain-resolution abstract feature in the time domain from the embedded features, thereby reconstructing a spectrum of the target audio in a mixed audio more accurately, and thus performing supervised learning.

In an embodiment, the computer device may determine a spectrum mask of the target audio included in the first audio according to the embedded feature of the first audio and the abstract feature of the target audio included in the first audio; reconstruct the target audio based on the spectrum mask; and construct the supervised training loss function to pre-train the encoding model and the extraction model according to a difference between the reconstructed target audio and the labeled audio of the first audio.

The spectrum mask is used for separating a spectrum of audio from the mixed audio. For example, assuming that mixed audio includes a target object, namely, a target speaker, corresponding to speech 1, and the speech 1 corresponds to a spectrum mask 1 (which is abbreviated as M1), a speech spectrum corresponding to the separated speech 1 may be obtained by multiplying the M1 by a spectrum of the mixed audio.

In the supervised training, the computer device may reconstruct a type of target function as the supervised training loss function. Through this type of target function, the supervised training model can ensure, to some extent, that features learned from the intermediate process are encoding results of the target audio. This approves that combining the discriminative learning capability of supervised training can effectively estimate the reliable joint probability distribution for unsupervised training.

In an embodiment, the supervised training loss function may estimate a mean square error (MSE) between the spectrum of the target audio and the spectrum of the labeled audio:

$$L_{\theta,\ \psi}^{(\text{MSE})} = \sum_{t,f} \left\| x - \mathbf{x}gSigmoid(c_t^\mathsf{T}v_t, f) \right\|_2^2 \qquad (7).$$

In which, $\theta$ and $\Psi$ represent the model parameters, $c_t$ represents the time-varying abstract feature calculated by the formula (6), and $v_t$ represents a time-varying embedded feature. $\mathbf{x}gSigmoid(c_t^\mathsf{T}v_t, f)$ represents the spectrum of the reconstructed target audio, and $x$ represents the spectrum of the labeled audio. The supervised learning based on an MSE loss function can effectively use labeled training data to regularize the discriminative embedding feature space.

In other embodiments, the supervised training function may use another type of reconstructed target function, for example, a scale-invariant signal-to-noise ratio (SI-SNR) target function, or the like.

Further, the computer device may fix the model parameters of the extraction model and the estimation model, and adjust the model parameter of the encoding model to minimize the supervised training loss function.

In the above embodiments, the labeled first audio is used for supervised training. At a supervised learning stage, the model parameters of the extraction model and the estimation model are not updated, and only the model parameter of the encoding model is updated. In this way, a discriminative embedded feature of an embedding space can be finely adjusted based on a more robust and general abstract feature obtained at the unsupervised training stage.

In step S 110, the unsupervised training and the supervised training are performed in combination, until a training stop condition is met.

On one hand, the supervised learning can effectively use labeled data to regularize the discriminative embedding feature space, but is limited by problems such as data efficiency, robustness, and generalization. On the other hand, the unsupervised learning is a powerful learning method that improves robustness and generalization through unlabeled data. In the embodiment of the present disclosure, a combined supervision-unsupervised learning (ASU) model training method is provided, so that a shared network model in the same architecture is updated by the supervised learning and the unsupervised learning in an alternate manner.

The encoding model and extraction model are obtained in the pre-training stage, and a relatively stable discriminative embedding feature space is constructed through the encoding model; and the supervised learning process and the unsupervised learning process are performed in combination until the model converges.

At the unsupervised learning stage, the model parameter of the encoding model is not updated, and only the model parameters of the extraction model and the estimation model are updated, so that the abstract feature is calculated based on the stable discriminative embedding feature space constructed in the previous stage. At the supervised learning stage, the model parameters of the extraction model and the estimation model are not updated, and only the model parameter of the encoding model is updated, so that the discriminative embedding feature space is finely adjusted based on the more robust and general abstract feature obtained in the previous stage.

In an embodiment, the computer device may select a part of the first audio as test data. When MSE loss on the test data is not improved for a preset number of consecutive iterations, it is considered that the model converges and the training is stopped. Moreover, according to actual training and tests, it is found that time required by combined training of the unsupervised learning stage and the supervised learning stage in the process of ASU is much shorter than a pre-training time. This is because, at the combined training stage, fine-adjusting is performed based on mainly the models obtained from pre-training, so the convergence is achieved quickly.

In an embodiment, an intuitive highlight-oriented selection mechanism may be used. That is, at the model training stage, speech of a speaker with the largest energy is selected as the target audio. At a model usage stage, the models can automatically select and track the speech of the speaker with the largest energy without providing any target clue. The training manners herein may be replaced with other solutions, such as, a permutation invariant training (PIT) method. According to the PIT method, correct output arrangement is determined by calculating a minimum value of a target function in an arrangement $A_{\psi_t} : v \to P, v \times P \to c$ extracted from all possible abstract features corresponding to the speech of the target speaker and interference signals:

$$L_{\theta, \varphi}^{(\mathrm{MSE})} = \min_{c_t \in \{c_{t1}, c_{t2}\}} \sum_{t,f} \left\| x - \mathbf{x} g Sigmoid(c_t^{\mathsf{T}} v_t, f) \right\|_2^2 + \min_{c_t \in \{c_{t1}, c_{t2}\}} \sum_{t,f} \left\| e - \mathbf{x} g Sigmoid(c_t^{\mathsf{T}} v_t, f) \right\|_2^2 \quad (8)$$

With the above model training method, the unsupervised learning and the supervised learning are combined in combination; based on the pre-trained encoding model and extraction model, in combination with the estimation model, the unsupervised training is performed on the encoding model, the extraction model, and the estimation model by using the unlabeled training samples, to optimize the model parameters of the extraction model and the estimation model; and the supervised training is performed on the encoding model and the extraction model by using the labeled training samples, to optimize the model parameter of the encoding model. The unsupervised training and the supervised training are performed in combination until the training is finished. In this way, the robust and generalizable representation capability learned by unsupervised learning and the discrimination capability learned by supervised learning are mutually optimized in iterations, so that the trained encoding model and extraction model achieve better effects in speech separation, and only a small quantity of labeled samples are required in a model training process, thereby greatly reducing costs.

In an embodiment, the method for training a speech separation model further includes: pre-training the encoding model and the extraction model. The process of pre-training the encoding model and the extraction model includes: performing FT on the first audio, to obtain an audio feature of the first audio; encoding the audio feature through the encoding model, to obtain an embedded feature of the first audio; extracting the embedded feature through the extraction model, to obtain an abstract feature of the target audio included in the first audio; and constructing a supervised training loss function to pre-train the encoding model and the extraction model according to the labeled audio of the first audio, the embedded feature of the first audio, and the abstract feature of the target audio included in the first audio.

In this embodiment of the present disclosure, the encoding model and the extraction model are pre-trained in a supervised manner. A supervised training process is similar to the process of S108, but the model parameters of the encoding model and the extraction model may be updated in the pre-training stage.

In an embodiment, the process of performing FT on the first audio, to obtain an audio feature of the first audio includes: performing STFT on the first audio, to obtain time-frequency points of the first audio; and obtaining a time-frequency feature formed by the time-frequency points as the audio feature of the first audio.

The computer device may perform the STFT on the first audio, to obtain a short-time Fourier spectrum $\chi \subseteq R^{TF}$ of the first audio, where $T$ represents a quantity of frames in a time dimension, $F$ represents a quantity of frequency bands in a frequency dimension, and R represents a real number.

In this embodiment of the present disclosure, the short-time Fourier spectrum of the first audio serves as input data (training samples) of the encoding model. In this way, a group of labeled training samples obtained from a group of labeled first audio may be represented to: $\{X^{(L+U+1)}, X^{(L+U+2)}, ..., X^{(L+U+N)} \in \chi\}$. Then, each training sample may be a group of time-frequency points $\{\mathbf{x} = X_{t,f}\}_{t=1,...,T; f=1,...,F}$ of an input space. $X_{t,f}$ may represent time-frequency points of a f-th frequency band in a t-th frame. A time-frequency feature formed by these time-frequency points may be a real number matrix with a dimension of $T \times F$.

In an embodiment, the computer device may map a low-dimensional audio feature to a high-dimensional embedding space through the encoding model, to obtain an embedded feature.

The computer device may input a time-frequency point matrix (the time-frequency feature) of the first audio obtained by performing the STFT on the first audio into the encoding model. The encoding model performs non-linear operation on the input, and embeds the inputs into a D-dimensional embedding space, to obtain the embedded feature of the first audio in the embedding space.

For example, the encoding model is: $E_\theta: \chi \to v \subseteq R^{TF \times D}$, where $\theta$ represents the model parameter of the encoding model, $D$ represents a dimension of the embedding space, $E_\theta$ represents mapping an input domain $\chi$ to a high-dimensional embedding space $V$. An embedded feature obtained by mapping a time-frequency feature formed by a group of time-frequency points in the input space is a real number matrix with a dimension of $T \times F' \times D$. An input domain $\chi \subseteq R^{TF}$ represents a short-time Fourier spectrum of the audio, $T$ represents a quantity of frames in a time dimension, and $F$ represents a quantity of frequency bands in a frequency dimension. The input of the encoding model is a group of time-frequency points $(T \times F)$ in the input domain, this group of time-frequency points may be classified into $T$ groups according to frames, with time-frequency points $(1 \times F)$ per group, namely, time-frequency points of each frame of the audio. Then, an embedded feature $v$ of an output domain may be an embedded feature $v_t$ corresponding to each frame of the audio, namely, each frame of the second audio corresponds to one embedding feature, which may be referred to as a time-varying embedded feature.

In an embodiment, the process of extracting the embedded feature through the extraction model, to obtain an abstract feature of the target audio included in the first audio includes: performing processing on the embedded feature through a first hidden layer of the extraction model, to obtain a prediction probability that the time-frequency points of the first audio are time-frequency points of the target audio; and performing calculation on embedded features of the time-frequency points and prediction probabilities of the time-frequency points through the second hidden layer of the extraction model, to construct a time-varying abstract feature of the target audio included in the first audio.

Processing is performed on the embedded feature of the first audio through the first hidden layer of the extraction model, to obtain the prediction probability that the time-frequency points of the first audio are predicted to be the time-frequency points of the target audio. Calculation is performed on the embedded features of the time-frequency points and the prediction probabilities of the time-frequency points through the second hidden layer of the extraction model, to construct the time-varying abstract feature of the target audio included in the first audio.

For example, the extraction model is $A_\varphi: v \to P \subseteq R^{TF}$, $v \times P \to C \subseteq R^D$, where $\varphi$ represents the model parameter of the extraction model. $A_\varphi$ represents an operation process that the embedded feature $v$ is converted into a probability matrix $P$, and an abstract feature $C$ is obtained according to the embedded feature $v$ and the probability matrix $P$. $P$ represents a real number matrix with a dimension of $T \times F$. $C$ represents a real number vector with a dimension of $D \times 1$ or $1 \times D$. The input of the encoding model is the group of time-frequency points $(T \times F)$ in the input domain, and $P$ represents a real number matrix with a dimension of $T \times F$. In this way, $P$ may be a probability matrix formed by prediction probabilities respectively corresponding to $T \times F$ time-frequency points. The prediction probabilities represent probabilities that the time-frequency points are predicted to be the time-frequency points of the target audio.

In an embodiment, the extraction model may calculate the time-varying abstract feature by using the formula (5) or the formula (6).

In an embodiment, the extraction model may use an autoregression model, and construct the time-varying abstract feature based on a local embedded feature (an embedded feature of a current frame of the second audio). Alternatively, the extraction model may use a recurrent model or an abstract function, and construct the time-varying abstract feature based on the local embedded feature.

In this embodiment, the extraction model extracts, through supervised learning, a high-time-domain-resolution abstract feature in the time domain from the embedded features, thereby reconstructing a spectrum of the target audio in the mixed audio more accurately, and thus performing supervised learning.

In an embodiment, the process of constructing a supervised training loss function to pre-train the encoding model and the extraction model according to the labeled audio of the first audio, the embedded feature of the first audio, and the abstract feature of the target audio included in the first audio includes: determining a spectrum mask of the target audio included in the first audio according to the embedded feature of the first audio and the abstract feature of the target audio included in the first audio; reconstructing the target audio based on the spectrum mask; and constructing the supervised training loss function to pre-train the encoding model and the extraction model according to a difference between the reconstructed target audio and the labeled audio of the first audio.

The spectrum of the target audio is reconstructed. Specifically, in the supervised training, the computer device may reconstruct a type of target function as the supervised training loss function. Through this type of target function, the supervised training model can ensure, to some extent, that features learned from the intermediate process are encoding results of the target audio. This approves that the reliable joint probability distribution for unsupervised training can be effectively estimated by combining the discriminative learning capability of supervised training.

In an embodiment, the supervised training loss function may be as the formular (7), for estimating a mean square error (MSE) between the spectrum of the target audio and the spectrum of the labeled audio.

In other embodiments, the supervised training function may be another type of reconstructed target function, for example, a scale-invariant signal-to-noise ratio (SI-SNR) target function.

Further, the computer device may adjust the model parameters of the encoding model and the extraction model to minimize the supervised training loss function.

In the above embodiments, the labeled first audio is used for supervised training, the encoding model and the extraction model are pre-trained, and a relatively stable discriminative embedding feature space is constructed through the encoding model, and the reliable joint probability distribution for subsequent unsupervised learning is effectively estimated based on the stable discriminative embedding feature space.

In an embodiment, the labeled first audio is labeled mixed signals, and the unlabeled second audio includes unlabeled mixed signals and pure noise signals.

When the computer device jointly trains the encoding model, the extraction model, and the estimation model, a spectrum $\{X^{(L+U+1)}, X^{(L+U+2)}, ..., X^{(L+U+N)} \in \chi\}$ of the labeled mixed signals, a spectrum $\{X^{(1)}, X^{(2)}, ..., X^{(L)} \in \chi\}$ of the unlabeled mixed signals, and a spectrum $\{X^{(L+1)}, X^{(L+2)}, ..., X^{(L+U)} \in \chi\}$ of the pure noise signals may be obtained. Time-frequency points $\{\mathbf{x} = X_{t,f}\}_{t=1,...,T; f=1,...,F}$ of these spectra serve as input data. $T$ represents a quantity of frames in a time dimension, $F$ represents a quantity of frequency bands in a frequency dimension, and $X_{t,f}$ may represent time-frequency points of a f-th frequency band in a t-th frame. For example, the mixed signals may use a sampling rate of 16 kHz, and the spectrum of the mixed signals may use an STFT window length of 25 ms, window shift of 10 ms, and 257 STFT frequency bands.

The computer device may set a size of batch processing data, an initial learning rate $\alpha$ and $\beta$, and a weight reduction coefficient of the learning rate. For example, the computer device may set the size of batch processing data to be 32, the initial learning rate to be 0.0001, and the weight reduction coefficient of the learning rate to be 0.8.

At the pre-training stage, the computer device may classify the labeled mixed signals into more than one batch of mixed signals according to the size of the batch processing data. For time-frequency points of each batch of mixed signals, after the encoding model and the extraction model are inputted, $\arg\min_{\theta,\psi} L_{\theta,\psi}^{(MSE)}$ is calculated based on the formula (7), and the model parameters $(\theta, \psi)$ of the encoding model and the extraction model are updated until the models converge.

The computer device calculates a prediction probability p through the pre-trained extraction model, and classify the time-frequency points of the labeled mixed signals and the unlabeled mixed signals into time-frequency-point positive samples and time-frequency-point negative samples.

$$\mathbf{x} = \begin{cases} \chi^+, & ifp_{t,f} > \Gamma^+ \\ \chi^-, & ifp_{t,f} < \Gamma^- \end{cases} \tag{9}$$

$\Gamma^+$ and $\Gamma^-$ represnt probability thresholds. For example, $\Gamma^+ = 0.5$.

At a combined training stage, the computer device may classify the mixed signals into more than one batch of mixed signals according to the size of the batch processing data. For each time-frequency-point positive sample $\chi_t^+$, K time-frequency-point negative samples are randomly selected from a noise interference joint set $\chi_t^+ \cup \{X^{(L+1)}, X^{(L+2)}, ..., X^{(L+U)}\}$. In this way, based on the formula (4), the model parameters $(\Psi, \omega)$ of the extraction model and the MI estimation model are updated according to $(\psi, \omega) - \alpha \times \partial L_\Theta^{(ImNICE)} / \partial(\psi, \omega)$; and based on the formula (7), the model parameter $\theta$ of the encoding model is updated according to $\theta - \beta \times \partial L_{\theta, \psi}^{(MSE)} / \partial\theta$, until the models converge.

A quantity of output layer nodes of the encoding model is set to be 40, a quantity of random down-sampling frames for each segment of mixed audio is set to be 32, and a quantity of negative samples corresponding to each positive sample in the formula (4) is set to be 63. The operation of classifying into time-frequency-point positive samples and time-frequency-point negative samples may be performed without iterations of the combined training stage or in iterations of the combined training stage. The difference between the two manners is that the former has a smaller calculation amount in each iteration, but convergence may be slower; and the latter has a greater calculation amount in each iteration, but convergence may be quicker. When MSE loss of the models is not improved for three consecutive training iterations, it may be considered that the convergence is achieved and the training is finished.

In an embodiment, the method for training a speech separation model further includes: using the model. The process of using the model includes: obtaining mixed audio on which speech separation is to be performed; performing processing on an audio feature of the mixed audio through the encoding model obtained after the unsupervised training and supervised training is finished, to obtain an embedded feature of the mixed audio; performing processing on the embedded feature of the mixed audio through the extraction model obtained after the unsupervised training and supervised training is finished, to obtain an abstract feature of the target audio included in the mixed audio; and reconstructing the target audio in the mixed audio according to the embedded feature of the mixed audio and the abstract feature of the target audio included in the mixed audio.

The mixed audio on which speech separation is to be performed is audio mixed with the target audio. The target audio may be speech of a target speaker. The mixed audio may be audio recorded in a session scenario with more than one speaker, speech of a speaker recorded in a noisy environment, or the like.

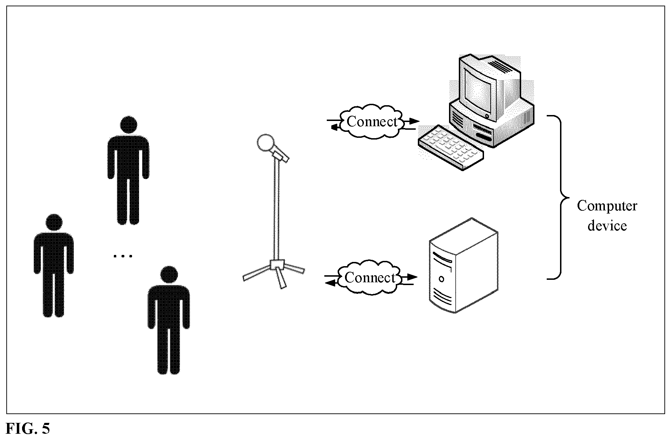

For example, FIG. 5 is a schematic diagram of a speech separation scenario according to an embodiment. FIG. 5 includes more than one speaker. When these speakers conduct a session, audio is collected through a far field microphone, to obtain mixed audio. The far field microphone conveys the collected data to a computer device, and the computer device obtains mixed audio on which speech separation is to be performed.

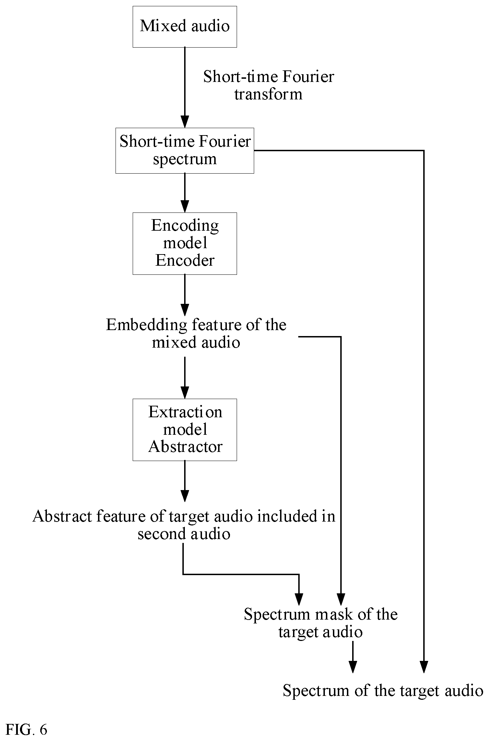

Referring to FIG. 6, after the mixed audio on which speech separation is to be performed is obtained, the computer device may perform STFT on the mixed audio, to obtain a short-time Fourier spectrum of the mixed audio; input time-frequency points of the short-time Fourier spectrum into the encoding model obtained after the unsupervised training and supervised training is finished, where the encoding model outputs the embedded feature of the mixed audio; and inputs the embedded feature of the mixed audio into the extraction model obtained after the unsupervised training and supervised training is finished, where the extraction model outputs the abstract feature of the target audio included in the mixed audio. The computer device generates a spectrum mask of the target audio in the mixed audio according to the embedded feature of the mixed audio and the abstract feature of the target audio included in the mixed audio; and obtains a spectrum of the target audio according to the short-time Fourier spectrum of the mixed audio, to separate the target audio.

In this embodiment, through the encoding model and the extraction model obtained after the unsupervised training and supervised training is finished, a robust and generalizable feature of hidden signals can be effectively extracted from the mixed signal, thereby being beneficial to separate the hidden signals from the mixed signals.

In addition, under conditions of a variety of interference environments and multiple signal-to-noise ratios, 0dB-20dB music background noise interference, interference from other speakers, and background noise interference are included. In the present disclosure, the method according to the embodiments of the present disclosure is compared with other existing methods that use unsupervised learning. A comparison result shows that, the model training manner provided in the present disclosure is better than these existing methods on speech separation performance, for example, perceptual evaluation of speech quality (PESQ), short-term objective intelligibility (STOI), and signal-to-distortion ratio (SDR), and stability. Moreover, with the model training manner provided in the present disclosure, the feature of the target audio included in the mixed audio (such as a feature of speech of the target speaker hidden in the mixed signals) can be automatically learned, without additional permutation invariant training (PIT) method processing, a speaker tracking mechanism or processing and adjustment defined by an expert.

In the embodiment of the present disclosure, based on the provided model training method, the trained encoding model and extraction model can effectively learn the robust and generalizable feature of the hidden signals from mixed signals containing interference. In addition, in the embodiments of the present disclosure, a large amount of unlabeled data in real industrial application scenarios can be mined and used; and when a data scenario of model training and a data scenario actually used by the models are more mismatched, advantages of combining supervised learning and unsupervised learning provided in the embodiments of the present disclosure become more apparent.

The encoding model and extraction model obtained through training in the embodiments of the present disclosure can be better applied to the separation of single-channel speech, and a typical cocktail problem can also be well solved.

Although the steps in the flowcharts of the embodiments are displayed sequentially according to instructions of arrows, these steps are not necessarily performed sequentially according to a sequence instructed by the arrows. Unless otherwise explicitly specified in this specification, execution of the steps is not strictly limited, and the steps may be performed in other orders. Moreover, at least a part of the steps in the foregoing embodiments may include multiple sub-steps or multiple stages. The sub-steps or stages are not necessarily performed at the same time instant, and may be performed at different time instants. The sub-steps or stages are not necessarily performed successively in order, and may be performed in turn or alternately with at least a part of other steps or sub-steps or stages of other steps.

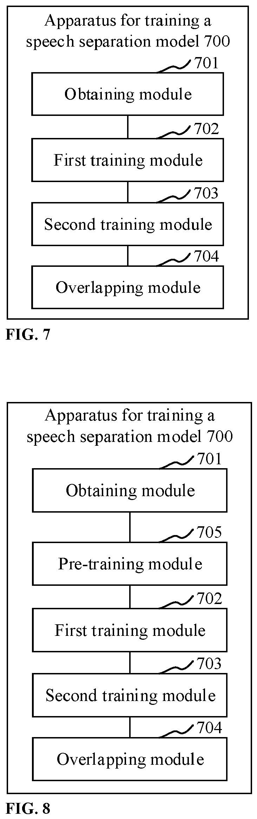

As shown in FIG. 7, in an embodiment, an apparatus 700 for training a speech separation model is provided. Referring to FIG. 7, the apparatus 700 for training a speech separation model includes: an obtaining module 701, a first

16

training module 702, a second training module 703, and an overlapping module 704. The modules included in the apparatus for training a speech separation model may be implemented entirely or partially by software, hardware, or a combination thereof.

The obtaining module 701 is configured to obtain first audio and second audio, where the first audio includes target audio and labeled audio, and the second audio includes noise audio; obtain an encoding model, an extraction model, and an initial estimation model, where an output of the encoding model is inputted to the extraction model, both the output of the encoding model and an output of the extraction model are inputted to the estimation model, and the encoding model and the extraction model jointly perform speech separation.

The first training module 702 is configured to perform unsupervised training on the encoding model, the extraction model, and the estimation model according to the second audio, and adjust model parameters of the extraction model and the estimation model.

The second training module 703 is configured to perform supervised training on the encoding model and the extraction model according to the first audio and the labeled audio included in the first audio, and adjust the model parameter of the encoding model.

The overlapping module 704 is configured to perform the unsupervised training and the supervised training in combination, until a training stop condition is met.

Referring to FIG. 8, in an embodiment, the apparatus 700 for training a speech separation model further includes: a pre-training module 705. The pre-training module 705 is configured to perform FT on the first audio, to obtain an audio feature of the first audio; encode the audio feature through the encoding model, to obtain an embedded feature of the first audio; extract the embedded feature through the extraction model, to obtain an abstract feature of the target audio included in the first audio; and construct a supervised training loss function to pre-train the encoding model and the extraction model according to the labeled audio of the first audio, the embedded feature of the first audio, and the abstract feature of the target audio included in the first audio.

In an embodiment, the pre-training module 705 is further configured to perform STFT on the first audio, to obtain time-frequency points of the first audio; and obtain a time-frequency feature formed by the time-frequency points as the audio feature of the first audio.

In an embodiment, the pre-training module 705 is further configured to perform processing on the embedded feature through a first hidden layer of the extraction model, to obtain a prediction probability that the time-frequency points of the first audio are time-frequency points of the target audio; and perform calculation on embedded features of the time-frequency points and prediction probabilities of the time-frequency points through a second hidden layer of the extraction model, to construct a time-varying abstract feature of the target audio included in the first audio.

In an embodiment, the pre-training module 705 is further configured to determine a spectrum mask of the target audio included in the first audio according to the embedded feature of the first audio and the abstract feature of the target audio included in the first audio; reconstruct the target audio based on the spectrum mask; and construct the supervised training loss function to pre-train the encoding model and the extraction model according to a difference between the reconstructed target audio and the labeled audio of the first audio.

In an embodiment, the first training module 702 is further configured to encode an audio feature of the second audio through the encoding model, to obtain an embedded feature of the second audio; extract the embedded feature of the second audio through the extraction model, to obtain an abstract feature of the target audio included in the second audio; perform processing on the embedded feature of the second audio and the abstract feature of the target audio included in the second audio through the estimation model, to obtain an MI estimation feature between the second audio and the abstract feature of the target audio included in the second audio; construct an unsupervised training loss function according to the MI estimation feature; and fix the model parameter of the encoding model, and adjust the model parameters of the extraction model and the estimation model to minimize the unsupervised training loss function.

In an embodiment, the first training module 702 is further configured to perform processing on the embedded feature of the second audio through the first hidden layer of the extraction model, to obtain a prediction probability that time-frequency points of the second audio are the time-frequency points of the target audio; and chronologically perform calculation on embedded features of the time-frequency points and prediction probabilities of the time-frequency points through the second hidden layer of the extraction model, to construct a global abstract feature of the target audio included in the second audio.

In an embodiment, the first training module 702 is further configured to select first time-frequency points predicted to be positive samples according to the prediction probabilities of the time-frequency points; obtain second time-frequency points serving as negative samples, the second time-frequency points being selected from pure noise audio, time-frequency points of the pure noise audio following a noise proposal distribution ; and construct the unsupervised training loss function according to an MI estimation feature corresponding to the first time-frequency points and an MI estimation feature corresponding to the second time-frequency points.

In an embodiment, the second training module 703 is further configured to encode the audio feature of the first audio through the encoding model, to obtain the embedded feature of the first audio; extract the embedded feature of the first audio through the extraction model, to obtain an abstract feature of the target audio included in the first audio; construct a supervised training loss function according to the labeled audio of the first audio, the embedded feature of the first audio, and the abstract feature of the target audio included in the first audio; and fix the model parameter of the extraction model, and adjusting the model parameter of the encoding model to minimize the supervised training loss function.

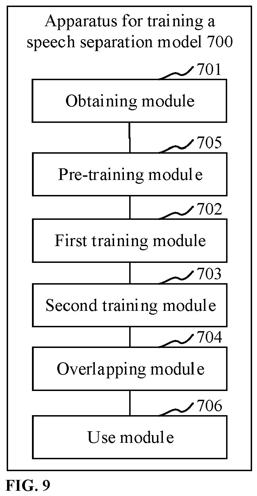

Referring to FIG. 9, in an embodiment, the apparatus 700 for training a speech separation model further includes a use module 706. The use module 706 s configured to obtain mixed audio on which speech separation is to be performed; perform processing on an audio feature of the mixed audio through the encoding model obtained after the unsupervised training and supervised training is finished, to obtain an embedded feature of the mixed audio; perform processing on the embedded feature of the mixed audio through the extraction model obtained after the unsupervised training and supervised training is finished, to obtain an abstract feature of the target audio included in the mixed audio; and reconstruct the target audio in the mixed audio according to the embedded feature of the mixed audio and the abstract feature of the target audio included in the mixed audio.

In an embodiment, the first audio and the second audio are single-channel audio; the first audio is the mixed audio including the target audio; the labeled audio of the first audio is the pure target audio; and the second audio includes pure noise audio and mixed audio including the noise audio.

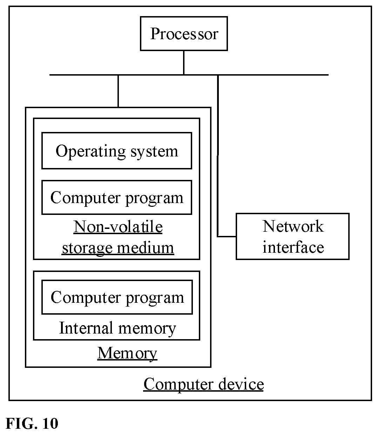

FIG. 10 is a structural diagram of a computer device according to an embodiment. The computer device may be specifically the terminal 110 or the server 120 in FIG. 3. As shown in FIG. 10, the computer device includes a processor, a memory, and a network interface connected via a system bus. The memory includes a non-volatile storage medium and an internal memory. The non-volatile storage medium of the computer device stores an operating system and may further store a computer program. The computer program, when executed by the processor, causes the processor to implement the method for training a speech separation model. The internal memory may also store a computer program. The computer program, when executed by the processor, causes the processor to perform the speech separation model training method. A person skilled in the art may understand that, the structure shown in FIG. 10 illustrates only a block diagram of a part of a structure related to a solution of the present disclosure and does not limit the computer device to which the solution of the present disclosure is applied. Specifically, the computer device may include more or fewer members than those in the drawings, or some components may be combined, or the components are arranged in different manners.

In an embodiment, the apparatus for training a speech separation model provided in the present disclosure may be implemented in a form of a computer program, and the computer program may be run on the computer device shown in FIG. 10. A memory of the computer device may store program modules forming the apparatus for training a speech separation model, for example, the obtaining module 701, the first training module 702, the second training module 703, and the overlapping module 704 shown in FIG. 7. The computer program formed by the program modules causes the processor to perform steps in the method fo training a speech separation model in embodiments of the present disclosure described in this specification.

For example, the computer device shown in FIG. 10 may obtain first audio and second audio by using the obtaining module 701 of the apparatus for training a speech separation model shown in FIG. 7, where the first audio includes target audio and labeled audio, and the second audio includes noise audio; obtain an encoding model, an extraction model, and an initial estimation model, where an output of the encoding model is inputted to the extraction model, both the output of the encoding model and an output of the extraction model are inputted to the estimation model, and the encoding model and the extraction model jointly perform speech separation. The computer device performs unsupervised training on the encoding model, the extraction model, and the estimation model according to the second audio, and adjusts model parameters of the extraction model and the estimation model through the first training module 702. The computer device performs supervised training on the encoding model and the extraction model according to the first audio and the labeled audio included in the first audio, and adjusts a model parameter of the encoding model through the second training module 703. The computer device performs the unsupervised training and the supervised training in combination through the overlapping module 704, until a training stop condition is met.

In an embodiment, a computer device is provided, including a memory and a processor. The memory stores a computer program. The computer program, when executed by the processor, causes the processor to perform the steps of the foregoing method for training a speech separation model. Herein, the steps of the method for training a speech separation model may be the steps of the method for training a speech separation model in the foregoing embodiments.

In an embodiment, a computer-readable storage medium is provided, storing a computer program. The computer program, when being executed by a processor, causes the processor to perform the steps of the foregoing method for training a speech separation model. Herein, the steps of the method for training a speech separation model may be the steps of the method for training a speech separation model in the foregoing embodiments.

In an embodiment, a computer program product or a computer program is provided. The computer program product or the computer program includes computer instructions. The computer instructions are stored in a computer-readable storage medium. The processor of the computer device reads the computer instructions from the computer-readable storage medium, and the processor executes the computer instructions, to cause the computer device to perform the steps in the method embodiments.

A person of ordinary skill in the art may understand that all or some of the procedures of the methods in the foregoing embodiments may be implemented by a computer program instructing related hardware. The program may be stored in a non-volatile computer-readable storage medium. When the program runs, the procedures of the foregoing method embodiments may be performed. Any reference to a memory, a storage, a database, or another medium used in the embodiments provided in this application may include a non-volatile and/or volatile memory. The non-volatile memory may include a read-only memory (ROM), a programmable ROM (PROM), an electrically programmable ROM (EPROM), an electrically erasable programmable ROM (EEPROM), a flash memory, or the like. The volatile memory may include a random access memory (RAM) or an external cache. As an illustration instead of a limitation, the RAM is available in various forms, such as a static RAM (SRAM), a dynamic RAM (DRAM), a synchronous DRAM (SDRAM), a double data rate SDRAM (DDRSDRAM), an enhanced SDRAM (ESDRAM), a synchronization link (Synchlink) DRAM (SLDRAM), a rambus direct RAM (RDRAM), a direct rambus dynamic RAM (DRDRAM), and a rambus dynamic RAM (RDRAM).

The technical features in the foregoing embodiments may be randomly combined. For concise description, not all possible combinations of the technical features in the embodiments are described.

The foregoing embodiments only show several implementations of the present disclosure, and the embodiments are described in detail, but should not be understood as a limitation to the scope of the present disclosure. A person of ordinary skill in the art may make several variations and improvements without departing from the concept of the present disclosure. Therefore, the protection scope of the present disclosure is defined by the appended claims.

**Claims**

1. A method for training a speech separation model, executable by a computer device, the method comprising:

    obtaining a first audio signal and a second audio signal, wherein the first audio signal comprises a target audio signal component and a labeled audio signal component, and the second audio signal comprising a noise audio signal;

    obtaining an encoding model, an extraction model, and an initial estimation model, wherein an output of the encoding model is inputted to the extraction model, both the output of the encoding model and an output of the extraction model are inputted to the estimation model, and the encoding model and the extraction model jointly perform speech separation;

    performing unsupervised training on the encoding model, the extraction model, and the estimation model according to the second audio signal |to adjust model parameters of the extraction model and the estimation model;

    performing supervised training on the encoding model and the extraction model according to the first audio signal and the labeled audio signal component comprised in the first audio signal to adjust a model parameter of the encoding model; and

    performing the unsupervised training and the supervised training in combination, until a training stop condition is met.

2. The method according to claim 1, further comprising:

    performing Fourier Transform ,FT, on the first audio signal, to obtain an audio feature of the first audio signal;

    encoding the audio feature through the encoding model, to obtain an embedded feature of the first audio signal;

    extracting the embedding feature through the extraction model, to obtain an abstract feature of the target audio signal component comprised in the first audio signal; and

    constructing a supervised training loss function to pre-train the encoding model and the extraction model according to the labeled audio signal component of the first audio signal, the embedded feature of the first audio signal, and the abstract feature of the target audio signal component comprised in the first audio signal.

3. The method according to claim 2, wherein the performing FT on the first audio signal, to obtain an audio feature of the first audio signal comprises:

    performing short-time Fourier transform STFT, on the first audio signal, to obtain time-frequency points of the first audio signal; and

    obtaining a time-frequency feature formed by the time-frequency points as the audio feature of the first audio signal.

4. The method according to claim 3, wherein the extracting the embedded feature through the extraction model, to obtain an abstract feature of the target audio signal component comprised in the first audio signal comprises:

performing processing on the embedded feature through a first hidden layer of the extraction model, to obtain a prediction probability that the time-frequency points of the first audio signal are time-frequency points of the target audio signal component; and

performing calculation on embedded features of the time-frequency points and prediction probabilities of the time-frequency points through a second hidden layer of the extraction model, to construct a time-varying abstract feature of the target audio signal component comprised in the first audio signal.

5. The method according to claim 2, wherein the constructing a supervised training loss function to pre-train the encoding model and the extraction model according to the labeled audio signal component of the first audio signal, the embedded feature of the first audio signal, and the abstract feature of the target audio signal component comprised in the first audio signal comprises:

determining a spectrum mask of the target audio signal component comprised in the first audio signal according to the embedded feature of the first audio signal and the abstract feature of the target audio signal component comprised in the first audio signal;

reconstructing the target audio signal component based on the spectrum mask; and

constructing the supervised training loss function to pre-train the encoding model and the extraction model according to a difference between the reconstructed target audio signal component and the labeled audio signal component of the first audio signal.

6. The method according to claim 1, wherein the performing unsupervised training on the encoding model, the extraction model, and the estimation model according to the second audio signal, to adjust model parameters of the extraction model and the estimation model comprises:

encoding an audio feature of the second audio signal through the encoding model, to obtain an embedded feature of the second audio signal;

extracting the embedded feature of the second audio signal through the extraction model, to obtain an abstract feature of the target audio signal component comprised in the second audio signal;

performing processing on the embedded feature of the second audio signal and the abstract feature of the target audio signal component comprised in the second audio signal through the estimation model, to obtain a mutual information ,MI, estimation feature between the second audio signal and the abstract feature of the target audio signal component comprised in the second audio signal;

constructing an unsupervised training loss function according to the MI estimation feature; and

fixing the model parameter of the encoding model, to adjust the model parameters of the extraction model and the estimation model to minimize the unsupervised training loss function.

7. The method according to claim 6, wherein the extracting the embedded feature of the second audio signal through the extraction model, to obtain an abstract feature of the target audio signal component comprised in the second audio signal comprises:

performing processing on the embedded feature of the second audio signal through the first hidden layer of the extraction model, to obtain a prediction probability that time-frequency points of the second audio signal are the time-frequency points of the target audio signal component; and

chronologically performing calculation on embedded features of the time-frequency points and prediction probabilities of the time-frequency points through the second hidden layer of the extraction model, to construct a global abstract feature of the target audio signal component comprised in the second audio signal.

8. The method according to claim 7, wherein the constructing an unsupervised training loss function according to the MI estimation feature comprises:

selecting first time-frequency points predicted to be positive samples according to the prediction probabilities of the time-frequency points;

obtaining second time-frequency points serving as negative samples, the second time-frequency points being selected from a pure noise audio signal, time-frequency points of the pure noise audio signal following a noise proposal distribution; and

constructing the unsupervised training loss function according to an MI estimation feature corresponding to the first time-frequency points and an MI estimation feature corresponding to the second time-frequency points.

9. The method according to claim 1, wherein the performing supervised training on the encoding model and the extraction model according to the first audio signal and the labeled audio signal component comprised in the first audio signal, to adjust a model parameter of the encoding model comprises:

encoding an audio feature of the first audio signal through the encoding model, to obtain an embedded feature of the first audio signal;

extracting the embedded feature of the first audio signal through the extraction model, to obtain an abstract feature of the target audio signal component comprised in the first audio signal;

constructing a supervised training loss function according to the labeled audio signal component of the first audio signal, the embedded feature of the first audio signal, and the abstract feature of the target audio signal component comprised in the first audio signal; and

fixing the model parameter of the extraction model to adjust the model parameter of the encoding model to minimize the supervised training loss function.

10. The method according to any one of claims 1 to 9, further comprising:

obtaining a mixed audio signal on which speech separation is to be performed;

performing processing on an audio feature of the mixed audio signal through the encoding model obtained when the unsupervised training and supervised training is completed, to obtain an embedded feature of the mixed audio;

performing processing on the embedded feature of the mixed audio signal through the extraction model obtained when the unsupervised training and supervised training is completed, to obtain an abstract feature of a target audio signal component comprised in the mixed audio signal; and

reconstructing the target audio signal component in the mixed audio signal according to the embedded feature of the mixed audio signal and the abstract feature of the target audio signal component comprised in the mixed audio signal.

11. The method according to any one of claims 1 to 9, wherein the first audio signal and the second audio signal are single-channel audio signals; the first audio signal is the mixed audio signal comprising the target audio signal component; the labeled audio signal component of the first audio signal is a pure target audio signal; and the second audio signal comprises a pure noise audio signal and a mixed audio signal comprising a noise audio signal.

12. An apparatus for training speech separation model, comprising:

an obtaining module, configured to obtain a first audio signal and a second audio signal, the first audio signal comprising a target audio signal component and a labeled audio signal component, and the second audio signal comprising a noise audio signal; and obtain an encoding model, an extraction model, and an initial estimation model, wherein an output of the encoding model is inputted to the extraction model, both the output of the encoding model and an output of the extraction model are inputted to the estimation model, and the encoding model and the extraction model jointly perform speech separation;

a first training module, configured to perform unsupervised training on the encoding model, the extraction model, and the estimation model according to the second audio signal, to adjust model parameters of the extraction model and the estimation model;

a second training module, configured to perform supervised training on the encoding model and the extraction model according to the first audio signal and the labeled audio signal component comprised in the first audio signal, to adjust a model parameter of the encoding model; and

a performing module, configured to perform the unsupervised training and the supervised training in combination, until a training stop condition is met.

13. The apparatus according to claim 12, further comprising:

a pre-training module, configured to perform Fourier Transform ,FT, on the first audio signal, to obtain an audio feature of the first audio signal; encode the audio feature through the encoding model, to obtain an embedded feature of the first audio signal; extract the embedded feature through the extraction model, to obtain an abstract feature of the target audio signal component comprised in the first audio signal; construct a supervised training loss function to pre-train the encoding model and the extraction model according to the labeled audio signal component of the first audio signal, the embedded feature of the first audio signal, and the abstract feature of the target audio signal component comprised in the first audio signal.

**14.** A computer device, comprising a memory and a processor, wherein the memory stores computer-readable instructions, the computer-readable instructions, when executed by the processor, cause the processor to perform the method according to any one of claims 1 to 11.

**15.** A non-volatile storage medium storing computer-readable instructions, wherein the computer-readable instructions, when executed by one or more processors, cause the one or more processors to perform the method according to any one of claims 1 to 11.

**Patentansprüche**

**1.** Verfahren zum Trainieren eines Sprachseparationsmodells, ausführbar durch eine Computervorrichtung, wobei das Verfahren umfasst:

- Erhalten eines ersten Audiosignals und eines zweiten Audiosignals, wobei das erste Audiosignal eine Ziel-Audiosignalkomponente und eine markierte Audiosignalkomponente umfasst und das zweite Audiosignal ein Rausch-Audiosignal umfasst;
- Erhalten eines Kodierungsmodells, eines Extraktionsmodells und eines anfänglichen Schätzungsmodells, wobei eine Ausgabe des Kodierungsmodells in das Extraktionsmodell eingegeben wird, sowohl die Ausgabe des Kodierungsmodells als auch eine Ausgabe des Extraktionsmodells in das Schätzungsmodell eingegeben werden und das Kodierungsmodell und das Extraktionsmodell gemeinsam eine Sprachseparation durchführen;
- Durchführen eines unüberwachten Trainings an dem Kodierungsmodell, dem Extraktionsmodell und dem Schätzmodell gemäß dem zweiten Audiosignal, um Modellparameter des Extraktionsmodells und des Schätzmodells anzupassen;
- Durchführen eines überwachten Trainings an dem Kodierungsmodell und dem Extraktionsmodell gemäß dem ersten Audiosignal und der markierten Audiosignalkomponente, die in dem ersten Audiosignal enthalten ist, um einen Modellparameter des Kodierungsmodells anzupassen; und
- Durchführen des unbeaufsichtigten Trainings und des überwachten Trainings in Kombination, bis eine Trainingsstoppbedingung erfüllt ist.

**2.** Das Verfahren nach Anspruch 1, das weiterhin umfasst:

- Durchführen einer Fourier-Transformation, FT, an dem ersten Audiosignal, um ein Audio-Merkmal des ersten Audiosignals zu erhalten;
- Kodieren des Audio-Merkmals durch das Kodierungsmodell, um ein eingebettetes Merkmal des ersten Audiosignals zu erhalten;
- Extrahieren des eingebetteten Merkmals durch das Extraktionsmodell, um ein abstraktes Merkmal der Ziel-Audiosignalkomponente zu erhalten, die in dem ersten Audiosignal enthalten ist; und
- Konstruieren einer überwachten Trainingsverlustfunktion, um das Kodierungsmodell und das Extraktionsmodell entsprechend der markierten Audiosignalkomponente des ersten Audiosignals, des eingebetteten Merkmals des ersten Audiosignals und des abstrakten Merkmals der Ziel-Audiosignalkomponente, die in dem ersten Audiosignal enthalten ist, vorzutrainieren.

**3.** Verfahren nach Anspruch 2, wobei die Durchführung der FT an dem ersten Audiosignal, um ein Audio-Merkmal des ersten Audiosignals zu erhalten, umfasst:

- Durchführen einer Kurzzeit-Fourier-Transformation, STFT, an dem ersten Audiosignal, um Zeit-Frequenz-Punkte des ersten Audiosignals zu erhalten; und
- Erhalten eines Zeit-Frequenz-Merkmals, das durch die Zeit-Frequenz-Punkte gebildet wird, als das Audio-Merkmal des ersten Audiosignals.

**4.** Verfahren nach Anspruch 3, wobei das Extrahieren des eingebetteten Merkmals durch das Extraktionsmodell, um ein abstraktes Merkmal der Ziel-Audiosignalkomponente, die in dem ersten Audiosignal enthalten ist, zu erhalten, umfasst:

- Durchführen einer Verarbeitung an dem eingebetteten Merkmal durch eine erste verborgene Schicht des Extraktionsmodells, um eine Vorhersagewahrscheinlichkeit zu erhalten, dass die Zeit-Frequenz-Punkte des ersten Audiosignals Zeit-Frequenz-Punkte der Ziel-Audiosignalkomponente sind; und
- Durchführen einer Berechnung an eingebetteten Merkmalen der Zeit-Frequenz-Punkte und Vorhersagewahrscheinlichkeiten der Zeit-Frequenz-Punkte durch eine zweite verborgene Schicht des Extraktionsmodells, um ein zeitveränderliches abstraktes Merkmal der Ziel-Audiosignalkomponente zu konstruieren, die in dem ersten Audiosignal enthalten ist.

5. Verfahren nach Anspruch 2, wobei das Konstruieren einer überwachten Trainingsverlustfunktion zum Vortrainieren des Kodierungsmodells und des Extraktionsmodells gemäß der markierten Audiosignalkomponente des ersten Audiosignals, des eingebetteten Merkmals des ersten Audiosignals und des abstrakten Merkmals der Ziel-Audiosignalkomponente, die in dem ersten Audiosignal enthalten ist, umfasst:

- Bestimmen einer Spektrumsmaske der Ziel-Audiosignalkomponente, die in dem ersten Audiosignal enthalten ist, gemäß dem eingebetteten Merkmal des ersten Audiosignals und dem abstrakten Merkmal der Ziel-Audiosignalkomponente, die in dem ersten Audiosignal enthalten ist;
- Rekonstruktion der Ziel-Audiosignalkomponente auf Basis der Spektrumsmaske; und
- Konstruieren der überwachten Trainingsverlustfunktion, um das Kodierungsmodell und das Extraktionsmodell entsprechend einer Differenz zwischen der rekonstruierten Zielaudiosignalkomponente und der markierten Audiosignalkomponente des ersten Audiosignals vorzutrainieren.

6. Verfahren nach Anspruch 1, wobei das Durchführen des unüberwachten Trainings an dem Kodierungsmodell, dem Extraktionsmodell und dem Schätzmodell gemäß dem zweiten Audiosignal zum Anpassen von Modellparametern des Extraktionsmodells und des Schätzmodells umfasst:

- Kodieren eines Audio-Merkmals des zweiten Audiosignals durch das Kodierungsmodell, um ein eingebettetes Merkmal des zweiten Audiosignals zu erhalten;
- Extrahieren des eingebetteten Merkmals des zweiten Audiosignals durch das Extraktionsmodell, um ein abstraktes Merkmal der Ziel-Audiosignalkomponente zu erhalten, die in dem zweiten Audiosignal enthalten ist;
- Durchführen einer Verarbeitung an dem eingebetteten Merkmal des zweiten Audiosignals und dem abstrakten Merkmal der Ziel-Audiosignalkomponente, die in dem zweiten Audiosignal enthalten ist, durch das Schätzungsmodell, um ein gegenseitiges-Informations-, MI-, Schätzmerkmal zwischen dem zweiten Audiosignal und dem abstrakten Merkmal der Ziel-Audiosignalkomponente, die in dem zweiten Audiosignal enthalten ist, zu erhalten;
- Konstruieren einer unüberwachten Trainingsverlustfunktion gemäß dem MI-Schätzmerkmal; und
- Festlegen des Modellparameters des Kodierungsmodells, um die Modellparameter des Extraktionsmodells und des Schätzmodells anzupassen, um die unüberwachte Trainingsverlustfunktion zu minimieren.

7. Verfahren nach Anspruch 6, wobei das Extrahieren des eingebetteten Merkmals des zweiten Audiosignals durch das Extraktionsmodell, um ein abstraktes Merkmal der in dem zweiten Audiosignal enthaltenen Ziel-Audiosignalkomponente zu erhalten, umfasst:

- Durchführen einer Verarbeitung an dem eingebetteten Merkmal des zweiten Audiosignals durch die erste verborgene Schicht des Extraktionsmodells, um eine Vorhersagewahrscheinlichkeit zu erhalten, dass Zeit-Frequenz-Punkte des zweiten Audiosignals die Zeit-Frequenz-Punkte der Ziel-Audiosignalkomponente sind; und
- chronologisches Durchführen einer Berechnung an eingebetteten Merkmalen der Zeit-Frequenz-Punkte und Vorhersagewahrscheinlichkeiten der Zeit-Frequenz-Punkte durch die zweite verborgene Schicht des Extraktionsmodells, um ein globales abstraktes Merkmal der Ziel-Audiosignalkomponente zu konstruieren, die in dem zweiten Audiosignal enthalten ist.

8. Verfahren nach Anspruch 7, wobei das Konstruieren einer unüberwachten Trainingsverlustfunktion gemäß dem MI-Schätzmerkmal umfasst:

- Auswählen erster Zeit-Frequenz-Punkte, die gemäß den Vorhersagewahrscheinlichkeiten der Zeit-Frequenz-Punkte als positive Proben vorhergesagt werden;
- Erhalten von zweiten Zeit-Frequenz-Punkten, die als negative Proben dienen, wobei die zweiten Zeit-Frequenz-Punkte aus einem reinen Rausch-Audiosignal ausgewählt werden, wobei Zeit-Frequenz-Punkte des reinen Rausch-Audiosignals einer Rausch-Vorschlagsverteilung folgen; und
- Konstruieren der unüberwachten Trainingsverlustfunktion gemäß einem MI-Schätzmerkmal, das den ersten Zeit-Frequenz-Punkten entspricht, und einem MI-Schätzmerkmal, das den zweiten Zeit-Frequenz-Punkten entspricht.

9. Verfahren nach Anspruch 1, wobei das Durchführen eines überwachten Trainings an dem Kodierungsmodell und dem Extraktionsmodell gemäß dem ersten Audiosignal und der markierten Audiosignalkomponente, die in dem ersten Audiosignal enthalten ist, zum Anpassen eines Modellparameters des Kodierungsmodells umfasst:

- Kodieren eines Audio-Merkmals des ersten Audiosignals durch das Kodiermodell, um ein eingebettetes Merkmal des ersten Audiosignals zu erhalten;
- Extrahieren des eingebetteten Merkmals des ersten Audiosignals durch das Extraktionsmodell, um ein abstraktes Merkmal der Ziel-Audiosignalkomponente zu erhalten, die in dem ersten Audiosignal enthalten ist;
- Konstruieren einer überwachten Trainingsverlustfunktion gemäß der markierten Audiosignalkomponente des ersten Audiosignals, des eingebetteten Merkmals des ersten Audiosignals und des abstrakten Merkmals der Ziel-Audiosignalkomponente, die in dem ersten Audiosignal enthalten ist; und
- Festlegen des Modellparameters des Extraktionsmodells, um den Modellparameter des Kodierungsmodells anzupassen, um die überwachte Trainingsverlustfunktion zu minimieren.

10. Verfahren nach einem beliebigen der Ansprüche 1 bis 9, das weiterhin umfasst:

- Erhalten eines gemischten Audiosignals, an dem eine Sprachseparation durchgeführt werden soll;
- Durchführen der Verarbeitung an einem Audio-Merkmal des gemischten Audiosignals durch das Kodierungsmodell, das erhalten wird, wenn das unüberwachte Training und das überwachte Training abgeschlossen sind, um ein eingebettetes Merkmal des gemischten Audiosignals zu erhalten;
- Durchführen einer Verarbeitung an dem eingebetteten Merkmal des gemischten Audiosignals durch das Extraktionsmodell, das erhalten wird, wenn das nicht überwachte Training und das überwachte Training abgeschlossen sind, um ein abstraktes Merkmal einer Ziel-Audiosignalkomponente zu erhalten, die in dem gemischten Audiosignal enthalten ist; und
- Rekonstruktion der Ziel-Audiosignalkomponente in dem gemischten Audiosignal gemäß dem eingebetteten Merkmal des gemischten Audiosignals und dem abstrakten Merkmal der Ziel-Audiosignalkomponente, die in dem gemischten Audiosignal enthalten ist.

11. Verfahren nach einem beliebigen der Ansprüche 1 bis 9, wobei das erste Audiosignal und das zweite Audiosignal einkanalige Audiosignale sind; das erste Audiosignal das gemischte Audiosignal ist, das die Ziel-Audiosignalkomponente umfasst; die markierte Audiosignalkomponente des ersten Audiosignals ein reines Ziel-Audiosignal ist; und das zweite Audiosignal ein reines Rausch-Audiosignal und ein gemischtes Audiosignal umfasst, das ein Rausch-Audiosignal umfasst.

12. Vorrichtung zum Trainieren eines Sprachseparationsmodells, aufweisend:

- ein Erfassungsmodul, das ausgebildet ist, ein erstes Audiosignal und ein zweites Audiosignal zu erhalten, wobei das erste Audiosignal eine Ziel-Audiosignalkomponente und eine markierte Audiosignalkomponente umfasst und das zweite Audiosignal ein Rausch-Audiosignal umfasst; und ein Kodierungsmodell, ein Extraktionsmodell und ein anfängliches Schätzmodell zu erhalten, wobei eine Ausgabe des Kodierungsmodells in das Extraktionsmodell eingegeben wird, sowohl die Ausgabe des Kodierungsmodells als auch eine Ausgabe des Extraktionsmodells in das Schätzmodell eingegeben werden und das Kodierungsmodell und das Extraktionsmodell gemeinsam eine Sprachseparation durchführen;
- ein erstes Trainingsmodul, das ausgebildet ist, ein unüberwachtes Training an dem Kodierungsmodell, dem Extraktionsmodell und dem Schätzmodell in Übereinstimmung mit dem zweiten Audiosignal durchzuführen, um Modellparameter des Extraktionsmodells und des Schätzmodells anzupassen;
- ein zweites Trainingsmodul, das ausgebildet ist, ein überwachtes Training an dem Kodierungsmodell und dem Extraktionsmodell entsprechend dem ersten Audiosignal und der markierten Audiosignalkomponente, die in dem ersten Audiosignal enthalten ist, durchzuführen, um einen Modellparameter des Kodierungsmodells anzupassen; und
- ein Durchführungsmodul, das ausgebildet ist, das unüberwachte Training und das überwachte Training in Kombination durchzuführen, bis eine Trainingsstoppbedingung erfüllt ist.

**13.** Vorrichtung nach Anspruch 12, weiterhin aufweisend:

- ein Vor-Trainingsmodul, das ausgebildet ist, eine Fourier-Transformation (FT) an dem ersten Audiosignal durchzuführen, um ein Audio-Merkmal des ersten Audiosignals zu erhalten; das Audio-Merkmal durch das Kodierungsmodell zu kodieren, um ein eingebettetes Merkmal des ersten Audiosignals zu erhalten; das eingebettete Merkmal durch das Extraktionsmodell zu extrahieren, um ein abstraktes Merkmal der Ziel-Audiosignalkomponente zu erhalten, die in dem ersten Audiosignal enthalten ist; eine überwachte Trainingsverlustfunktion zu konstruieren, um das Kodierungsmodell und das Extraktionsmodell entsprechend der markierten Audiosignalkomponente des ersten Audiosignals, des eingebetteten Merkmals des ersten Audiosignals und des abstrakten Merkmals der Ziel-Audiosignalkomponente, die in dem ersten Audiosignal enthalten ist, vorzutrainieren.

**14.** Computervorrichtung, die einen Speicher und einen Prozessor aufweist, wobei der Speicher computerlesbare Anweisungen speichert, wobei die computerlesbaren Anweisungen, wenn sie von dem Prozessor ausgeführt werden, den Prozessor dazu veranlassen, das Verfahren nach einem beliebigen der Ansprüche 1 bis 11 auszuführen.

**15.** Nichtflüchtiges Speichermedium, das computerlesbare Anweisungen speichert, wobei die computerlesbaren Anweisungen, wenn sie von einem oder mehreren Prozessoren ausgeführt werden, den einen oder die mehreren Prozessoren dazu veranlassen, das Verfahren nach einem beliebigen der Ansprüche 1 bis 11 auszuführen.

## Revendications

**1.** Procédé d'entraînement d'un modèle de séparation de parole, apte à être mis en oeuvre par un dispositif informatique, le procédé comprenant:

- obtenir un premier signal audio et un deuxième signal audio, le premier signal audio comprenant une composante de signal audio cible et une composante de signal audio étiquetée, et le deuxième signal audio comprenant un signal audio de bruit;
- obtenir un modèle de codage, un modèle d'extraction et un modèle d'estimation initiale, dans lequel une sortie du modèle de codage est entrée dans le modèle d'extraction, aussi bien la sortie du modèle de codage qu'une sortie du modèle d'extraction sont entrées dans le modèle d'estimation, et le modèle de codage et le modèle d'extraction effectuent conjointement une séparation de parole;
- effectuer un entraînement non supervisé sur le modèle de codage, le modèle d'extraction et le modèle d'estimation selon le deuxième signal audio pour ajuster des paramètres de modèle du modèle d'extraction et du modèle d'estimation;
- effectuer un entraînement supervisé sur le modèle de codage et le modèle d'extraction selon le premier signal audio et la composante de signal audio étiquetée comprise dans le premier signal audio pour ajuster un paramètre de modèle du modèle de codage; et
- effectuer l'entraînement non supervisé et l'entraînement supervisé en combinaison, jusqu'à ce qu'une condition d'arrêt d'entraînement soit remplie.

**2.** Procédé selon la revendication 1, comprenant en outre:

- effectuer une transformation de Fourier, FT, sur le premier signal audio pour obtenir une caractéristique audio du premier signal audio;
- coder la caractéristique audio via le modèle de codage pour obtenir une caractéristique intégrée du premier signal audio;
- extraire la caractéristique intégrée via le modèle d'extraction pour obtenir une caractéristique abstraite de la composante de signal audio cible comprise dans le premier signal audio; et
- construire une fonction de perte d'entraînement supervisée pour pré-entraîner le modèle de codage et le modèle d'extraction selon la composante de signal audio étiquetée du premier signal audio, la caractéristique intégrée du premier signal audio et la caractéristique abstraite de la composante de signal audio cible comprise dans le premier signal audio.

**3.** Procédé selon la revendication 2, dans lequel la réalisation d'une FT sur le premier signal audio pour obtenir une caractéristique audio du premier signal audio, comprend:

- effectuer une transformée de Fourier à court terme, STFT, sur le premier signal audio pour obtenir des points temps-fréquence du premier signal audio; et
- obtenir une caractéristique temps-fréquence formée par les points temps-fréquence, en tant que caractéristique audio du premier signal audio.

4. Procédé selon la revendication 3, dans lequel l'extraction de la caractéristique intégrée via le modèle d'extraction, pour obtenir une caractéristique abstraite de la composante de signal audio cible comprise dans le premier signal audio comprend:

- effectuer un traitement sur la caractéristique intégrée via une première couche cachée du modèle d'extraction, pour obtenir une probabilité de prédiction selon laquelle les points temps-fréquence du premier signal audio sont des points temps-fréquence de la composante de signal audio cible; et
- effectuer un calcul sur des caractéristiques intégrées des points temps-fréquence et des probabilités de prédiction des points temps-fréquence via une deuxième couche cachée du modèle d'extraction pour construire une caractéristique abstraite variable dans le temps de la composante de signal audio cible comprise dans le premier signal audio.

5. Procédé selon la revendication 2, dans lequel la construction d'une fonction de perte d'entraînement supervisée pour pré-entraîner le modèle de codage et le modèle d'extraction selon la composante de signal audio étiquetée du premier signal audio, la caractéristique intégrée du premier signal audio et la caractéristique abstraite de la composante de signal audio cible comprise dans le premier signal audio comprend:

- déterminer un masque spectral de la composante de signal audio cible comprise dans le premier signal audio selon la caractéristique intégrée du premier signal audio et la caractéristique abstraite de la composante de signal audio cible comprise dans le premier signal audio;
- reconstruire la composante de signal audio cible sur la base du masque spectral; et
- construire la fonction de perte d'entraînement supervisée pour pré-entraîner le modèle de codage et le modèle d'extraction selon une différence entre la composante de signal audio cible reconstruite et la composante de signal audio étiquetée du premier signal audio.

6. Procédé selon la revendication 1, dans lequel l'exécution d'un entraînement non supervisé sur le modèle de codage, le modèle d'extraction et le modèle d'estimation selon le deuxième signal audio pour ajuster des paramètres de modèle du modèle d'extraction et du modèle d'estimation comprend:

- coder une caractéristique audio du deuxième signal audio via le modèle de codage pour obtenir une caractéristique intégrée du deuxième signal audio;
- extraire la caractéristique intégrée du deuxième signal audio via le modèle d'extraction pour obtenir une caractéristique abstraite de la composante de signal audio cible comprise dans le deuxième signal audio;
- effectuer un traitement sur la caractéristique intégrée du deuxième signal audio et la caractéristique abstraite de la composante de signal audio cible comprise dans le deuxième signal audio, via le modèle d'estimation, pour obtenir une caractéristique d'estimation d'information mutuelle, MI, entre le deuxième signal audio et la caractéristique abstraite de la composante de signal audio cible comprise dans le deuxième signal audio;
- construire une fonction de perte d'entraînement non supervisée selon la caractéristique d'estimation MI; et
- fixer le paramètre de modèle du modèle de codage pour ajuster les paramètres de modèle du modèle d'extraction et du modèle d'estimation afin de minimiser la fonction de perte d'entraînement non supervisée.

7. Procédé selon la revendication 6, dans lequel l'extraction de la caractéristique intégrée du deuxième signal audio via le modèle d'extraction pour obtenir une caractéristique abstraite de la composante de signal audio cible comprise dans le deuxième signal audio comprend:

- effectuer un traitement sur la caractéristique intégrée du deuxième signal audio via la première couche cachée du modèle d'extraction pour obtenir une probabilité de prédiction selon laquelle les points temps-fréquence du deuxième signal audio sont les points temps-fréquence de la composante de signal audio cible; et
- effectuer chronologiquement un calcul sur des caractéristiques intégrées des points temps-fréquence et des probabilités de prédiction des points temps-fréquence via la deuxième couche cachée du modèle d'extraction afin de construire une caractéristique abstraite globale de la composante de signal audio cible comprise dans le deuxième signal audio.

8. Procédé selon la revendication 7, dans lequel la construction d'une fonction de perte d'entraînement non supervisée selon la caractéristique d'estimation MI comprend:

- sélectionner des premiers points temps-fréquence prédits comme étant des échantillons positifs selon les probabilités de prédiction des points temps-fréquence;
- obtenir des deuxièmes points temps-fréquence servant d'échantillons négatifs, les deuxièmes points temps-fréquence étant sélectionnés parmi un signal audio de bruit pur, des points temps-fréquence du signal audio de bruit pur suivant une distribution de proposition de bruit; et
- construire la fonction de perte d'entraînement non supervisée selon une caractéristique d'estimation MI correspondant aux premiers points temps-fréquence et une caractéristique d'estimation MI correspondant aux deuxièmes points temps-fréquence.

9. Procédé selon la revendication 1, dans lequel l'exécution d'un entraînement supervisé sur le modèle de codage et le modèle d'extraction selon le premier signal audio et la composante de signal audio étiquetée comprise dans le premier signal audio, pour ajuster un paramètre de modèle du modèle de codage comprend:

- coder une caractéristique audio du premier signal audio via le modèle de codage pour obtenir une caractéristique intégrée du premier signal audio;
- extraire la caractéristique intégrée du premier signal audio via le modèle d'extraction pour obtenir une caractéristique abstraite de la composante de signal audio cible comprise dans le premier signal audio;
- construire une fonction de perte d'entraînement supervisée selon la composante de signal audio étiquetée du premier signal audio, la caractéristique intégrée du premier signal audio et la caractéristique abstraite de la composante de signal audio cible comprise dans le premier signal audio; et
- fixer le paramètre de modèle du modèle d'extraction pour ajuster le paramètre de modèle du modèle de codage afin de minimiser la fonction de perte d'entraînement supervisée.

10. Procédé selon l'une quelconque des revendications 1 à 9, comprenant en outre:

- obtenir un signal audio mixte sur lequel une séparation de parole doit être effectuée;
- effectuer un traitement sur une caractéristique audio du signal audio mixte via le modèle de codage obtenu lorsque l'entraînement non supervisé et l'entraînement supervisé sont terminés, pour obtenir une caractéristique intégrée du signal audio mixte;
- effectuer un traitement sur la caractéristique intégrée du signal audio mixte via le modèle d'extraction obtenu lorsque l'entraînement non supervisé et l'entraînement supervisé sont terminés, pour obtenir une caractéristique abstraite d'une composante de signal audio cible comprise dans le signal audio mixte; et
- reconstruire la composante de signal audio cible dans le signal audio mixte selon la caractéristique intégrée du signal audio mixte et la caractéristique abstraite de la composante de signal audio cible comprise dans le signal audio mixte.

11. Procédé selon l'une quelconque des revendications 1 à 9, dans lequel le premier signal audio et le deuxième signal audio sont des signaux audio mono-canaux; le premier signal audio est le signal audio mixte comprenant la composante de signal audio cible, la composante de signal audio étiquetée du premier signal audio est un signal audio cible pur, et le deuxième signal audio comprend un signal audio de bruit pur et un signal audio mixte comprenant un signal audio de bruit.

12. Dispositif d'entraînement d'un modèle de séparation de parole, comprenant:

- un module d'obtention qui est configuré pour obtenir un premier signal audio et un deuxième signal audio, le premier signal audio comprenant une composante de signal audio cible et une composante de signal audio étiquetée, et le deuxième signal audio comprenant un signal audio de bruit, et pour obtenir un modèle de codage, un modèle d'extraction et un modèle d'estimation initiale, une sortie du modèle de codage étant entrée dans le modèle d'extraction, aussi bien la sortie du modèle de codage qu'une sortie du modèle d'extraction étant entrées dans le modèle d'estimation, et le modèle de codage et le modèle d'extraction effectuent conjointement une séparation de parole;
- un premier module d'entraînement qui est configuré pour effectuer un entraînement non supervisé sur le modèle de codage, le modèle d'extraction et le modèle d'estimation selon le deuxième signal audio pour ajuster des paramètres de modèle du modèle d'extraction et du modèle d'estimation;
- un deuxième module d'entraînement qui est configuré pour effectuer un entraînement supervisé sur le modèle de codage et le modèle d'extraction selon le premier signal audio et la composante de signal audio étiquetée comprise dans le premier signal audio pour ajuster un paramètre de modèle du modèle de codage; et
- un module de mise en oeuvre qui est configuré pour effectuer l'entraînement non supervisé et l'entraînement supervisé en combinaison, jusqu'à ce qu'une condition d'arrêt d'entraînement soit remplie.

13. Dispositif selon la revendication 12, comprenant en outre:

- un module de pré-entraînement qui est configuré pour effectuer une transformation de Fourier, FT, sur le premier signal audio afin d'obtenir une caractéristique audio du premier signal audio, coder la caractéristique audio via le modèle de codage pour obtenir une caractéristique intégrée du premier signal audio, extraire la caractéristique intégrée via le modèle d'extraction pour obtenir une caractéristique abstraite de la composante de signal audio cible comprise dans le premier signal audio, construire une fonction de perte d'entraînement supervisée pour pré-entraîner le modèle de codage et le modèle d'extraction selon la composante de signal audio étiquetée du premier signal audio, la caracté-ristique intégrée du premier signal audio et la caractéristique abstraite de la composante de signal audio cible comprise dans le premier signal audio.

14. Dispositif informatique comprenant une mémoire et un processeur, dans lequel la mémoire stocke des instructions lisibles par ordinateur, les instructions lisibles par ordinateur, lorsqu'elles sont exécutées par le processeur, amènent le processeur à mettre en oeuvre le procédé selon l'une quelconque des revendications 1. à 11.

15. Support de stockage non volatil stockant des instructions lisibles par ordinateur, dans lequel les instructions lisibles par ordinateur, lorsqu'elles sont exécutées par un ou plusieurs processeurs, amènent ledit un ou lesdits plusieurs processeurs à mettre en oeuvre le procédé selon l'une quelconque des revendications 1 à 11.

S102

Obtain a first audio signal and a second audio signal, the first audio signal including a target audio signal component and a labeled audio signal component, and the second audio signal including a noise audio signal

S104

Obtain an encoding model, an extraction model and an initial estimation model, an output of the encoding model is inputted to the extraction model, both the output of the encoding model and an output of the extraction model are inputted to the estimation model, and the encoding model and the extraction model jointly performing speech separation

S106

Perform unsupervised training on the encoding model, the extraction model and the estimation model according to the second audio signal, to adjust model parameters of the extraction model and the estimation model

S108

Perform supervised training on the encoding model and the extraction model according to the first audio signal and the labeled audio signal component included in the first audio signal, to adjust a model parameter of the encoding model

S110

Perform the unsupervised training and the supervised training in combination, until a training stop condition is met

FIG. 1

Labeled&unlabeled mixed
signals（labeled&unlabeled
Speech）

Embedding space
（Embedding space）

Abstract feature
（abstract feature）

Pure noise
signals（Noises）

Embedded feature

| Time-frequency points of input domain | Embedding model Encoder | Embedded feature | Extraction model Abstractor | Abstract feature | Estimation model Estimator | Mutual information estimation result |

**FIG. 2**

Time-frequency points of second audio

$$\{\mathbf{X} = X_{t,f}\}_{t=1,...,T; f=1,...,F}$$

```
┌──────────────┐
│   Encoding   │
│    model     │
│   Encoder    │
└──────────────┘
```

Embedded feature $\{v_t\}_{t=1,...,T}$

```
┌─────────────────────────────────────────────┐
│               Prediction probabilities        │
│               corresponding to the            │
│  Extraction   time-frequency points of        │
│  model        the second audio                │
│  Abstractor                                    │
│               {P_{t,f}}_{t=1,...,T; f=1,...,F} │
└─────────────────────────────────────────────┘
```

Global abstract feature c of
the second audio

```
┌──────────────┐
│  Estimation  │
│    model     │
│  Estimator   │
└──────────────┘
```

Unsupervised loss function
（Unsupervised Loss）

**FIG. 3**

Time-frequency points of first audio

$$\{\mathbf{x} = X_{t,f}\}_{t=1...T, f=1...F}$$

Encoding
model
Encoder

Embedded feature $\{v_t\}_{t=1...T}$

Extraction
model
Abstractor

Prediction probabilities
corresponding to the time-
frequency points of the
first audio
$\{p_{t,f}\}_{t=1...T, f=1...F}$

Time-varying abstract feature
of the second audio $\{c_t\}_{t=1...T}$

Supervised loss function
(Supervised Loss)

**FIG. 4**

**FIG. 5**

Mixed audio

Short-time Fourier
transform

Short-time Fourier
spectrum

Encoding
model
Encoder

Embedding feature of the
mixed audio

Extraction
model
Abstractor

Abstract feature of target audio included in
second audio

Spectrum mask of the
target audio

Spectrum of the target audio

FIG. 6

Apparatus for training a
speech separation model 700

~701

Obtaining module

~702

First training module

~703

Second training module

~704

Overlapping module

**FIG. 7**

Apparatus for training a
speech separation model 700

~701

Obtaining module

~705

Pre-training module

~702

First training module

~703

Second training module

~704

Overlapping module

**FIG. 8**

Apparatus for training a
speech separation model 700

701

Obtaining module

705

Pre-training module

702

First training module

703

Second training module

704

Overlapping module

706

Use module

**FIG. 9**

Processor

Operating system

Computer program

Non-volatile
storage medium

Computer program

Internal memory

Memory

Network
interface

Computer device

**FIG. 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2020100139787

**Non-patent literature cited in the description**

- Two-Step Sound Source Separation: Training on Learned Latent Targets. **EFTHYMIOS TZINIS et al.** ARXIV.ORG. CORNELL UNIVERSITY LIBRARY, 23 October 2019